# EUROPEAN PATENT APPLICATION

(11) **EP 0 798 143 A1**
(43) Date of publication of application: **01.10.1997**
(21) Application number: 97104777.4
(22) Date of filing: 20.03.1997
(51) Int. Cl.: B60H 3/06, B01D 53/00, B01D 53/86

(54) **Method and apparatus for purifying air including adsorbent reactivation**

(30) Priority: 22.03.1996 JP 93636/96; 23.05.1996 JP 153252/96; 23.05.1996 JP 153397/96
(71) Applicant: Kabushiki Kaisha Equos Research, Tokyo-to (JP)
(72) Inventor: ANDO, Masao, Aichi-ken, 478 (JP); YAMANOUCHI, Ryoichi, Anjo-shi, Aichi-ken, 446 (JP); MIYAZAKI, Hideto, Aichi-ken, 446 (JP); SAKAI, Masako, Aichi-ken, 472 (JP)
(74) Representative: VOSSIUS & PARTNER

(57) **Abstract**

An air purifying apparatus which is especially suitable for use in automobiles is disclosed. The purifying apparatus comprises a purification passage having an inlet for introducing air and an outlet for discharging purified air; an adsorbent disposed in the purification passage and including a photocatalyst for mainly adsorbing NO in the air; a light source for irradiating light to the adsorbent; all air feeding device disposed in the air purification passage for feeding the air toward the adsorbent; and reactivating device for reactivating the adsorbent by stopping the air feeding device or adjusting the air feeding device so as to reduce the amount of the feeding air and/or by increasing the intensity of the light irradiated from the light source to raise the temperature of the adsorbent as needs arise or periodically. Therefore, the apparatus can effectively remove NO, which is difficult to be adsorbed by activated carbon, by the photocatalyst. Since the photocatalyst can be easily reactivated, it can be used for a long time. Such a reactivation can be carried our more effectively if it is performed under the reduced pressure.

## Description

The present invention relates to an apparatus for purifying air, a method of purifying air with such an air purifying apparatus and a method of reactivating an adsorbent used in the air purifying apparatus, and in particular relates to an air purifying apparatus for automobiles which uses an adsorbent comprised of activated carbon and a photocatalyst, a method of purifying air with such an air purifying apparatus and a method of reactivating the adsorbent used in the air purifying apparatus.

In the prior art, adsorbents such as activated carbon and the like have been used in air purifying apparatuses to remove odor components contained in living odors such as the order of tobacco smoke or the like from the air inside a room. In such air purifying apparatuses, room air is forcedly fed through a cartridge containing an adsorbent such as activated carbon to adsorb odor components such as those in tobacco smoke, and then the thus purified air is returned to the room. Further, when such air purifying apparatuses are used in automobiles, the air inside the automobile is purified by the adsorbent and returned to the inside of the automobile.

In these air purifying apparatuses which use an adsorbent such as activated carbon, the adsorption of the adsorbent deteriorates over time as the adsorbent adsorbs odor components such as those in tobacco smoke. As a result, the adsorbent must be replaced on a regular basis, and for this reason disposable cartridges which contain such an adsorbent are used.

Consequently, such air purifying apparatuses are not economical due to the high frequency at which such adsorbents must be replaced. Furthermore, if the adsorbent is not replaced on time, the air purifying apparatus will not be able to effectively purify the air passing through it.

Furthermore, when such an air purifying apparatus is used in an automobile, the air purifying apparatus must be able to remove NOx such as NO in addition to removing odor components such as those found in tobacco smoke. This is because the air that is taken inside an automobile from the outside thereof contains NOx such as NO, since gasoline and diesel engines exhaust NOx mainly comprised of NO. Specifically, in general, NO is unstable in the atmosphere and will gradually change into other NOx such as NO₂ and the like over time, but in traffic jams or on roads with heavy traffic, the proportion of NO in the NOx contained in air is quite high. Further, in automobiles, outside air is brought into the inside of the automobile from a lower portion of the automobile which is positioned just above a road. Therefore, the NO contained in such outside air is likely to be brought into the inside of the automobile. For these reasons, it is required for such an air purifying apparatus for automobiles to be able to effectively remove NO in the air.

However, there is a problem in that existing adsorbents such as activated carbon can not efficiently remove NO from the air passing through the adsorbent although they are able to adsorb other NOx except NO.

The present invention has been made in view of the problems of the prior art described above. Accordingly, the main object of the present invention is to provide an air purifying apparatus and a method of purifying air with such an apparatus which make it possible to purify air over a long period of time without having to replace the adsorbing means used in such an air purifying apparatus.

It is another object of the present invention to provide an air purifying apparatus which is particularly suitable for automobiles and a method of purifying air containing NO in such an air purifying apparatus.

It is still another object of the present invention to provide an air purifying apparatus which can effectively reactivate a photocatalyst and other adsorbent and a method of reactivating the photocatalyst and the adsorbent in such an air purifying apparatus.

In order to achieve the above mentioned objects, the present invention is directed to the air purifying apparatus for use in an automobile, which comprises:
a purification passage having an intake port for introducing air from a compartment of the automobile and an outlet for discharging purified air into the compartment of the automobile;
adsorbing means provided inside the purification passage and including a photocatalyst for mainly removing NO contained in the introduced air;
a light source for irradiating light toward the photocatalyst included in the adsorbing means; and
air feeding means for feeding the air from the compartment of the automobile toward the adsorbing means.

According to the air purifying apparatus having the above mentioned structure, NO contained in the air to be purified can be adsorbed by the photocatalyst included in the adsorbing means. Therefore, this apparatus can realize effective removal of NO from the air, which could not be carried out by the prior art apparatuses, thus enabling to achieve a desired purification of the air introduced into the automobile compartment from the outside thereof.

In this case, it is preferred that the light source is constructed so as to be able to emit ultraviolet rays. If the light source is constructed in this way, the NO adsorbed to the photocatalyst can be oxidized by the irradiation of the ultraviolet rays.

Further, it is also preferred that the adsorbing means further includes an adsorbent for mainly adsorbing odor components contained in the introduced air. If the adsorbing means is constructed in this way, NOx excepting NO and other odor components which can not be adsorbed by the photocatalyst can be removed from the air, thereby enabling to achieve even more desired purification of the air.

In this case, it is preferred that the adsorbent is formed of at least one material selected from the group comprising activated carbon, silicagel, activated alumina and zeolite.

Further, it is also preferred that the photocatalyst is carried by the adsorbent such as activated carbon.

If the photocatalyst is carried by the activated carbon in this way, NOx that is produced by being oxidized by the photocatalyst is immediately adsorbed by the activated carbon. This makes it possible to prevent the photocatalyst from being covered with such oxides, thereby enabling to extend the life of the photocatalyst. Further, because the NOx components such as NO₂ and the like adsorbed by the adsorbent (activated carbon) are spread over the photocatalyst and then they are oxidized and decomposed into nitrogen oxides such as nitric acid due to photocatalytic reaction, the provision of the photocatalyst together with the activated carbon also makes it possible to suppress the rate at which NOx components accumulate on the activated carbon. Accordingly, there is no need to frequently carry out an operation to eliminate adsorbed substances. Further, it is also possible to avoid the characteristics of the activated carbon from being altered by high temperature of heat that is added when the elimination operation is carried out. Therefore, it becomes possible to safely use the photocatalyst filter 32 over a long period of time without replacement. As described above, by having the photocatalyst to be carried by the activated carbon 32, a synergistic effect that both improve the adsorptivity and extend the life of the photocatalyst filter can be obtained.

As for the material for the photocatalyst, it can be formed of at least one material selected from the group comprising oxide of Ti, Cu, Zn, La, Mo, V, Sr, Ba, Ce, Sn, Fe, W, Mg and Al , and noble metals. In particular, TiO₂ is preferred.

In this invention, it is also preferred that the air purifying apparatus further includes another adsorbing means which is provided inside the purification passage for mainly adsorbing neutral gas. By constructing in this way, it becomes possible to remove various gases that can not be adsorbed by the filter including the photocatalyst and activated carbon, thus leading to even more desired purification of the air. In this case, the another adsorbing means can be arranged upstream from the adsorbing means so as to interpose the light source therebetween. Further, the another adsorbing means may be formed from an activated carbon fiber product which is formed by folding an activated carbon fiber sheet into a pleat-shape.

Furthermore, in this invention, it is also preferred that the air purifying apparatus further includes means for reactivating the adsorbing means by heating it periodically or as needs arise. The reactivating means may be realized by constructing the light source such that it generates heat that can raise the temperature of tile adsorbing means to a temperature required for reactivation thereof. The light source may be constructed so as to be able to emit ultraviolet rays and heat from a common single lamp, which makes it possible to simplify the structure of the apparatus. Further, it is further preferred that the light source is constructed so as to be able to change the intensity of the light irradiated therefrom in at least two levels including high intensity of light and low of intensity light. According to this, it is possible to switch between the elimination process and the purifying process only by controlling or adjusting the intensity of the light irradiated from the light source, which facilitates the control operation of the apparatus.

Preferably, such a reactivation operation is carried out when the adsorptivity of the adsorbing means is lowered due to saturation with the adsorbed substances. In such a case, the photocatalyst is activated by being irradiated with light and then it is heated by the irradiation of the light in order to eliminate adsorbed substances such as NO or the like. By using the photocatalyst with performing such reactivations, it becomes possible for the photocatalyst to remove NO for a long period of time. Further, the reactivated carbon contained in the adsorbing means is also reactivated by heat.

Preferably, the reactivating means is constructed from a gas concentration measuring means for measuring a concentration of a predetermined gas contained in the air which has passed the adsorbing means; a temperature sensor for measuring the temperature of the adsorbing means; and controlling means for controlling the intensity of the light irradiated from the light source and an amount of the air fed by the air feeding means responsive to the outputs from the gas concentration measuring means and the temperature sensor.

In this case, it is preferred that, when the gas concentration measuring means detects a lowering of the adsorptivity of the adsorbing means, the reactivating means is operated so as to stop the air feeding means or reduce the amount of the feeding air to raise the temperature of the adsorbing means via the controlling device, thereby performing the reactivation of the adsorbing means If the heating up of the adsorbing means is carried out by adjusting the amount of the feeding air from the air feeding means, it is not necessary to equip any additional special heating device, so that the structure can be simplified and the manufacturing cost thereof can also be reduced. For the reactivation purpose, the adsorbing means is heated up to a temperature between 80°C and 100°C, and more preferably about 80°C. Since the present invention enables to perform the reactivation at such a temperature mentioned above, it becomes possible to avoid that the characteristics of the adsorbent such as activated carbon are altered by a reactivation carried out at a high temperature.

Further, it is also preferable to control the reactivating means so as to increase the intensity of the light irradiated from the light source and stop the air feeding means or reduce the amount of the feeding air. If such a control is carried out, it is possible to immediately raise the temperature of the adsorbing means to a predetermined temperature, thereby enabling to complete the reactivation of the adsorbing means in a relatively short time.

When the temperature is raised, such raised temperature can be maintained at a predetermined value by adjusting the amount of the feeding air appropriately. Further, during the reactivation operation, it is preferred that the air intake port is coupled to the exhaust port so that the exhaust containing the eliminated or desorbed substances is discharged to the outside of the automobile or an air cleaner of an engine through the exhaust port.

It is also preferred that the air purifying apparatus of this invention further includes means for reducing the pressure inside the purification passage in which the adsorbing means is positioned so that reactivation of the adsorbing means can be carried out under the reduced pressure. By carrying our the reactivating process under the reduce pressure, such a reactivating process can be made more effectively.

In this case, it is preferred that such a reduced pressure condition is produced by utilizing negative pressure generated in or around the automobile when the automobile is running. By constructing in this way, it becomes possible to save necessary energy for creating such a reduced pressure condition (e.g. electrical power for a fan motor for producing a reduced pressure). For this purpose, the exhaust port which communicates with the outside of the automobile is arranged at a portion of the automobile where negative pressure is created during running of the automobile. More concretely, the exhaust port can be arranged in a trunk room of the automobile.

Further, in this case, the reactivating means can be constructed so that it is operated only when a speed sensor detects a speed that exceeds a predetermined speed over a certain period of time.

Another aspect of the present invention is directed to a method of purifying air in an air purifying apparatus for an automobile. This method of purifying air comprises the steps of:
feeding air inside a compartment of the automobile to adsorbing means including a photocatalyst;
irradiating a certain amount of light that enables the adsorbing means to cause photocatalytic reaction;
adsorbing NO contained in the air by the photocatalyst of the adsorbing means and removing the NO in the air; and
discharging the air from which the NO is removed inside the automobile.

According to this method having the above steps, NO contained in the air to be purified can be adsorbed by the photocatalyst included in the adsorbing means. Therefore, this method can realize effective removal of NO from the introduced air, which could not be carried out by the prior art apparatuses, thus enabling to achieve a desired purification of the air introduced into the automobile compartment from the outside thereof.

In this invention, it is preferred that the method further comprise a step of eliminating the NO which has been adsorbed by the photocatalyst by stopping feeding the air to the adsorbing means or reducing the amount of the feeding air to heat the adsorbing means when the adsorptivity for NO of the photocatalyst is lowered.

Alternatively, the method may further include a step of eliminating the NO which has been adsorbed by the photocatalyst by irradiating the photocatalyst with a relatively high intensity light to heat the adsorbing means when the adsorptivity for NO of the photocatalyst is lowered.

Further, the method may further include a step of eliminating the NO which has been adsorbed by the photocatalyst by stopping feeding the air to the adsorbing means or reducing the amount of the feeding air as well as by irradiating it with a relatively high intensity light to heat the adsorbing means when the adsorptivity for NO of the photocatalyst is lowered.

Furthermore, these methods may further include a step of adjusting the amount of the feeding air to the adsorbing means. In this case, the adjustment of the feeding air is operated so as to maintain the temperature of the adsorbing means at 80°C to 100°C.

Yet another aspect of the present invention is directed to an air purifying apparatus for an automobile, which comprises:
a purification passage having an intake for introducing air from a compartment of the automobile and an outlet for discharging purified air into the compartment of the automobile;
at least one adsorbing means provided inside the purification passage and including a photocatalyst for mainly removing NO contained in the introduced air and an adsorbent for mainly adsorbing odor components such as NOx except NO;
a light source for irradiating light toward the adsorbing means;
air feeding means for feeding the air in the compartment of the automobile toward the adsorbing means; and
reactivating means for reactivating the adsorbing means by adjusting the amount of the feeding air to raise the temperature of the adsorbing means as needs arise or periodically.

According to the above mentioned air purifying apparatus, since the photocatalyst adsorbs and oxidizes/decomposes NO contained in the air, it becomes possible to removed NO from the air to be purified. In addition, the photocatalyst and the adsorbent can also remove odor components such as NOx other than NO. Therefore, according to this air purifying apparatus, it is possible to achieve a purification of the air which is particularly suitable for used in an automobile. Further, when the adsorptivity of the adsorbing means is lowered due to saturation with the adsorbed substances, it is possible to reactivate the adsorbing means by heating it so as to raise the temperature thereof. Therefore, the adsorbing means can continuously remove NO, other NOx and other odor components purify air over a long period of time without the need for replacement.

In this air purifying apparatus, if the heating of the adsorbing means is carried out by irradiating ultraviolet rays thereto, it becomes possible to not only eliminate the adsorbed substances but also oxidize and decompose the adsorbed substances at the same time.

Further, it is preferred that the air feeding means is constructed so as to be able to adjust the amount of the feeding air, in which the reactivating means raises the temperature of the adsorbing means by controlling the air feeding means so as to adjust the amount of the feeding air. According to this, since the heating and reactivation for the adsorbing means are carried out by controlling the amount of the feeding air, it is not necessary to further provide any additional heating device, so that the structure of the apparatus can be simplified and the manufacturing cost thereof can be reduced.

The other aspect of the present invention is directed to the air purifying apparatus for an automobile, which comprises:
a purification passage having an inlet for introducing air from a compartment of the automobile and an outlet for discharging purified air into the compartment of the automobile;
adsorbing means disposed in the purification passage and including at least activated carbon;
heating means provided in the purification passage for heating the adsorbing means, the heating means being constructed so as to be able to adjust its quantity of heat;
air feeding means provided in the purification passage for feeding the air to the adsorbing means, the air feeding means being constructed so as to be able to adjust the amount of the feeding air; and
reactivating means for reactivating the adsorbing means by activating the heating means as well as by adjusting the amount of the feeding air to raise the temperature of the adsorbing means as needs arise or periodically.

According to this air purifying apparatus, a heat reactivation for the adsorbing means containing the activated carbon can be carried out by adjusting the amount of the feeding air from the air feeding means and the amount of the emitting heat from the heating means. Therefore, this apparatus which has a relatively simple structure can perform a purification of air for a long period of time without replacement of the adsorbing means.

Yet other aspect or the present invention is directed to the air purifying apparatus for an automobile, which comprises:
a purification passage having an intake for introducing air from a compartment of the automobile and an outlet for discharging purified air into the compartment of the automobile;
at least one adsorbing means disposed in the purification passage for purifying the air;
reactivating means for reactivating the adsorbing means to raise the temperature of the adsorbing means by heating the adsorbing means as needs arise or periodically; and
pressure reducing means for reducing an inner pressure of the purification passage in which the adsorbing means is disposed so that the reactivation of the adsorbing means is carried out under the reduced pressure.

According to the air purifying apparatus having the above structure, since the reactivation of the adsorbing means is carried out under the reduced pressure, it becomes possible to reactivate the adsorbing means more effectively.

In this case, if a reduced pressure condition is produced by utilizing negative pressure generated in or around the automobile during the running of the automobile, it is not necessary to provide any additional pressure reducing device for reducing the pressure. Therefore, the structure thereof can be simplified and the manufacturing cost thereof can also be reduced.

In order to utilize the negative pressure that is generated in or around the automobile during the running of the automobile, it is sufficient to provide an exhaust port which is switchable with the outlet port and which communicates with the outside of the automobile, and to dispose such an exhaust port at a portion of the automobile where negative pressure is created during running of the automobile. For example, the exhaust port can be arranged in a trunk room of the automobile. This arrangement makes it easy to be mounted to the automobile since it is not necessary to separately provide an exhaust pipe for discharging exhaust which is generated during the reactivation operation.

Further, in this case, it is preferred that the pressure reducing means is provided with a speed sensor, and the reactivating means can be constructed so that it is operated only when the speed sensor detects a speed that exceeds a predetermined speed over a certain period of time. According to this, it is possible to operate the reactivating means only when the necessary negative pressure is being generated.

The other aspect of the present invention is directed to the method of reactivating an adsorbent in an air purifying apparatus for an automobile. The method comprises the steps of:
reducing a pressure in an environment in which an adsorbing means is placed by utilizing a negative pressure that is generated in or around the automobile when the automobile is running; and
reactivating the adsorbing means by heating the adsorbing means under the reduced pressure.

According to this method, the reactivation of the adsorbing means can be performed effectively since it is carried out under the reduced pressure environment. Further, since negative pressure that is generated in or around the automobile when the automobile is running is utilized to produce the reduced pressure environment, it is possible to produce such a reduced pressure environment easily without providing any specific pressure reducing device.

Yet another aspect of the present invention is directed to the air purifying apparatus, which comprises:
an air purification passage having an intake for introducing air and an outlet for discharging purified air:
adsorbing means provided in the air purifying passage and including a photocatalyst for mainly adsorbing NO in the air;
a light source for irradiating light toward the adsorbing means, the light source being constructed so as to be able to change the intensity of the light irradiated therefrom;
air feeding means provided in the purification passage for feeding the air to the adsorbing means, the air feeding means being constructed so as to be able to adjust the amount of the feeding air; and
reactivating means for reactivating the adsorbing means by stopping the air feeding means or adjusting the air feeding means so as to reduce the amount of the feeding air and/or by increasing the intensity of the light irradiated from the light source to raise the temperature of the adsorbing means as needs arise or periodically.

According to the above mentioned air purifying apparatus, it is possible to remove NO and other odor components contained in the air by the the adsorbing means containing the photocatalyst. Further, when the adsorptivity of the adsorbing means is lowered due to saturation with the adsorbed substances, it is possible to reactivate the adsorbing means by adjusting the air feeding means so as to stop it or reduce the amount of the feeding air and/or by increasing the intensity of the light emitted from the light source to raise the temperature of the adsorbing means. Therefore, this air purifying apparatus can perform a desired purification of the air for a long time without replacement of the adsorbing means. Further, since the heating and reactivation for the adsorbing means can be carried out by the irradiation of the light from the light source and the adjustment of the amount of the feeding air by the air feeding means, it is not necessary to additionally provide any specific heating device. Therefore, since it is possible to provide an air purifying apparatus which has a simple structure and which can be manufactured at a low cost, such an air purifying apparatus can be widely used not only for air purifying apparatuses for automobiles but also for general air purifying apparatuses for use in rooms of houses or buildings.

In this apparatus, it is preferred that the adsorbing means further includes an adsorbent such as activated carbon for mainly adsorbing odor components in the air in addition to the photocatalyst. If constructed in this way, the odor components such as those found in the tobacco smoke or the like which are difficult to be adsorbed by the photocatalyst can be effectively removed, so that this apparatus is particularly suitable for air purifying apparatuses for use in rooms in houses or buildings.

Yet other aspect of the present invention is directed to the air purifying apparatus which comprises:
an air purification passage having an intake for introducing air and an outlet for discharging purified air:
adsorbing means provided in the air purifying passage and containing at least activated carbon;
means for heating the adsorbing means, the adsorbing means being constructed so as to be able to adjust the quantity of the heat:
air feeding means provided in the purification passage for feeding the air to the adsorbing means, the air feeding means being constructed so as to be able to adjust the amount of the feeding air; and
reactivating means for reactivating the adsorbing means by stopping the air feeding means or adjusting the air feeding means so as to reduce the amount of the feeding air and/or by increasing the quantity of the heat emitted from the heating means to raise the temperature of the adsorbing means as needs arise or periodically.

According to the air purifying apparatus as described above, it is possible to remove odor components such as those found in the tobacco smoke and NOx other than NO which are contained in the air by the adsorbing means containing the activated carbon. Further, when the adsorptivity of the adsorbing means is lowered due to saturation with the adsorbed substances, it is possible to reactivate the adsorbing means by adjusting the air feeding means so as to stop it or reduce the amount of the feeding air and/or by increasing the quantity of the heat emitted from the heating means to raise the temperature of the adsorbing means. Therefore, this air purifying apparatus can perform a purification of the air for a long period of time without replacement of the activated carbon. Further, since the heating and reactivation for the activated carbon can be carried out by maintaining the raised temperature at a predetermined value by adjusting the amount of the feeding air by the air feeding means, it is possible to avoid that the characteristics of the activated carbon is altered by heat at a high temperature. Therefore since this air purifying apparatus can be used for a long period of time without replacement of the adsorbing means, it is suitable for air purifying apparatuses for use in rooms in houses or buildings.

Yet other aspect of the present invention is directed to the air purifying apparatus which comprises:
an air purification passage having an inlet for introducing air and an outlet for discharging purified air;
at least one adsorbing means provided in the air purification passage for purifying the air;
reactivating means for reactivating the adsorbing means to raise the temperature of the adsorbing means to eliminate the adsorbed substances by heating the adsorbing means as needs arise or periodically; and
pressure reducing means for reducing an inner pressure of the purification passage in which the adsorbing means is disposed so that the reactivation of the adsorbing means is carried out under the reduced pressure.

According to this air purifying apparatus, the reactivation of the adsorbing means can be performed effectively since it is carried out under the reduced pressure in the purification passage.

Further, yet other aspect of the present invention is directed to the method of purifying air in an air purifying apparatus. This method comprises the steps of:
feeding air containing NO toward an adsorbing means which includes a photocatalyst and activated carbon;
irradiating a certain quantity of light that enable the photocatalyst of the adsorbing means to cause photocatalytic reaction;
adsorbing NO in the air by the photocatalyst of the adsorbing means and oxidizing the NO and removing it from the air; and
discharging the air which has been purified by the photocatalyst and the activated carbon.

According to this method, it is possible to effectively remove NO in the air which can not be removed by activated carbon. Therefore, this apparatus is particularly suitable for an air purifying apparatus for a room in a house or building which is adjacent to roads with heavy traffic.

Furthermore, yet other aspect of the present invention is also directed to the method of reactivating an adsorbent in an air purifying apparatus. This method comprises the steps of:
irradiating with a relatively high intensity light the adsorbent which contains a photocatalyst and is disposed in an air purification passage in the air purifying apparatus through which air to be purified passes, to heat the photocatalyst; and
accelerating the heating of the photocatalyst by stopping supply of the air or by reducing the amount of the supply of the air.

According to this method, when the heat reactivation of the photocatalyst is carried out, the heating up speed of the photocatalyst is accelerated by stopping supply of the air or reducing the amount of the feeding air, thereby enabling to complete the reactivation in a short time. In this case, it is preferred that the raised temperature of the photocatalyst is maintained at a predetermined value by adjusting the amount of the feeding air.

Moreover, other aspect of the present invention is also directed to the method of reactivating an adsorbent in an air purifying apparatus. This method comprises the steps of:
heating the adsorbent which contains at least activated carbon and which disposed in an air purifying passage of the air purifying apparatus through which air to be purified passes; and
accelerating the heating up of the adsorbent and then maintaining the raised temperature in a predetermined value by adjusting the amount of the supply of the air.

According to this method of reactivating an adsorbent, since the adsorbent containing activated carbon is reactivated easily, it is possible to use the activated carbon for a long time without replacement thereof. Further, by adjusting the amount of the supply of the air, it is possible to heat the adsorbent in a short time and further it is also possible to maintain the raised temperature at a prescribed value. Therefore, it is possible to avoid situation that the characteristics of the activated carbon is altered during the reactivation process due to heat applied thereto.

Moreover, yet other aspect of the present invention is also directed to the method of reactivating an adsorbent in an air purifying apparatus. This reactivating method comprises the steps of:
reducing a pressure in an environment in the air purifying apparatus in which an adsorbing means containing at least activated carbon is placed; and
reactivating the adsorbing means by heating the adsorbing means under the reduced pressure.

According to this method, the reactivation of the adsorbing means can be performed effectively since it is carried out under the reduced pressure environment.

These and other objects, features and advantages of the present inventions will become more apparent from a consideration of the following description of the preferred embodiments taken in conjunction with the accompanying drawings.

Fig. 1 is a schematic view showing the structure of a first embodiment of an air purifying apparatus according to the present invention.

Fig. 2 is an explanatory view showing the mounting position of the air purifying apparatus when the air purifying apparatus of the first embodiment is adapted for use in an automobile.

Fig. 3 is a perspective view of a photocatalyst filter used in the air purifying apparatus of the first embodiment.

Figs. 4(A) and 4(B) show the structure of the photocatalyst filter, in which Fig. 4(A) is a schematic view showing a filter element of the photocatalyst filter which is formed from folded thin metallic sheets and Fig. 4(B) is also a schematic view showing a filter base member of the photocatalyst filter which is formed by stucking a plurality of the filter elements together.

Fig. 5 is a perspective view of a filter element of an adsorption filter used in the air purifying apparatus of the first embodiment.

Fig. 6 is a schematic view of a testing apparatus used to test the removal abilities of the photocatalyst filter and the adsorption filter.

Fig. 7 is a graph showing the results of the NO removal test 1 for the photocatalyst filter for the case in which no ultraviolet ray irradiation takes place.

Fig. 8 is a graph showing the results of the NO removal test 2 for the photocatalyst filter for the case in which an ultraviolet ray irradiation takes place.

Fig. 9 is a graph showing the results of the NO removal test 3 for the photocatalyst filter for the case in which a small amount of the photocatalyst is used and an ultraviolet ray irradiation takes place.

Fig. 10 is a graph showing the results of the reactivation test for the photocatalyst filter.

Figs. 11(A) - 11(D) are conceptual views showing how NO is adsorbed and eliminated from the photocatalyst filter.

Fig. 12 is a graph showing the results of the neutral gas adsorption test for the photocatalyst filter.

Fig. 13 is a graph showing the results of the neutral gas adsorption test for the photocatalyst filter and the adsorption filter.

Fig. 14 is a flow chart showing the operation of the air purifying apparatus of the first embodiment .

Fig. 15 is a schematic view showing the structure of a second embodiment of an air purifying according to the present invention.

Fig. 16 is a graph showing the results of an experiment for measuring changes in the surface temperature of the photocatalyst filter.

Fig. 17 is a flow chart showing the operation of the air purifying apparatus of the second embodiment when used in an automobile.

Fig. 18 is a schematic view showing the structure of a third embodiment of an air purifying apparatus according to the present invention.

Figs. 19(A),(B) are perspective views of a fourth embodiment of an air purifying apparatus according to the present invention, in which Fig. 19(A) shows the state of the air purifying apparatus when it is purifying air, and Fig. 19(B) shows the state of the air purifying apparatus when it is carrying out an operation to reactivate an activated carbon filter.

Fig. 20 is a side view showing the position where the air purifying apparatus of the fourth embodiment is mounted in an automobile.

Fig. 21 is a flow chart showing the control operations of a control device of the fourth embodiment of the air purifying apparatus.

Fig. 22 is a schematic view showing the structure of a fifth embodiment of an automobile air purifying apparatus according to the present invention.

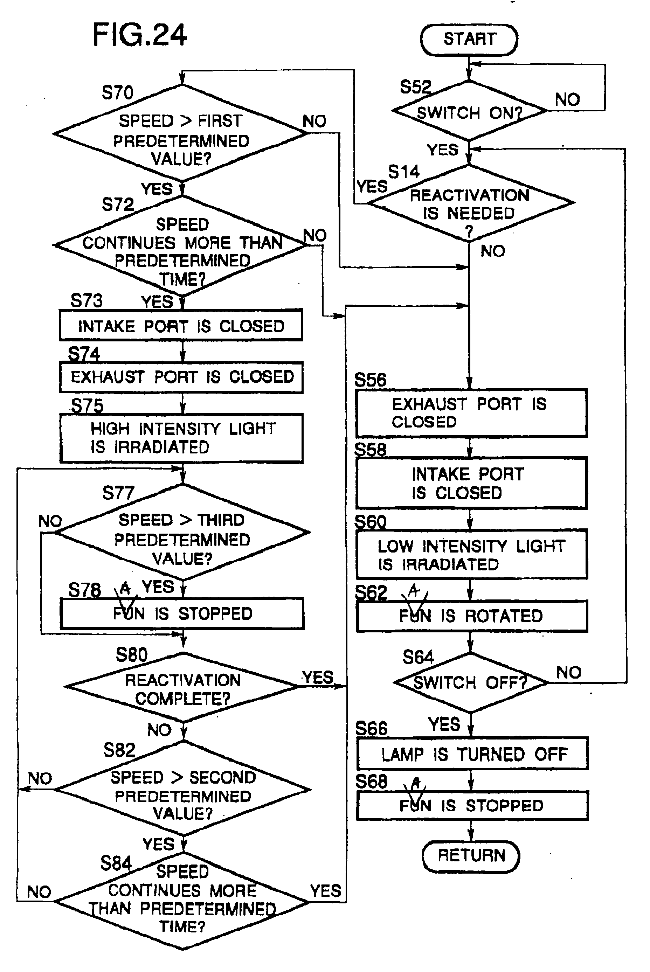

Fig. 23 is a side view showing the position where the air purifying apparatus of the fifth embodiment is mounted in

an automobile. Fig. 24 is a flow chart showing the main routine of a control device of the air purifying apparatus of the fifth embodiment .

With reference to the appended drawings, a detailed description of the preferred embodiments of the present invention will now be given below.

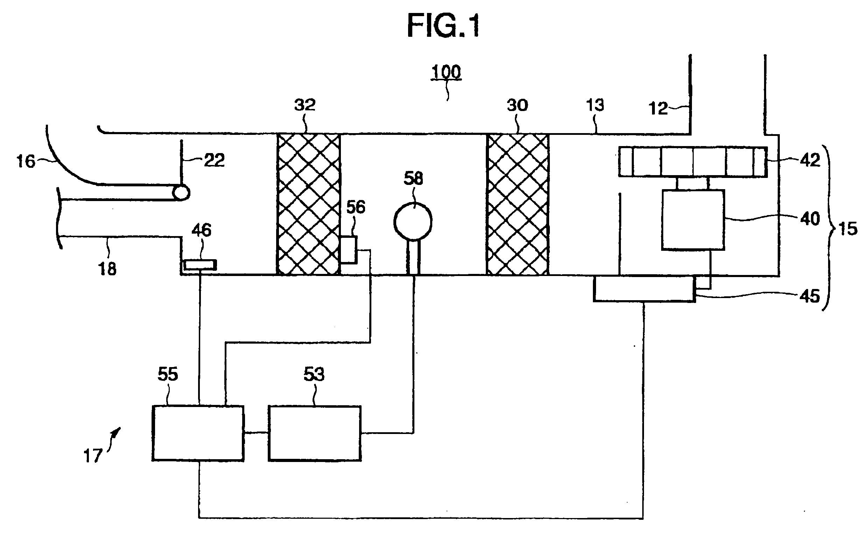

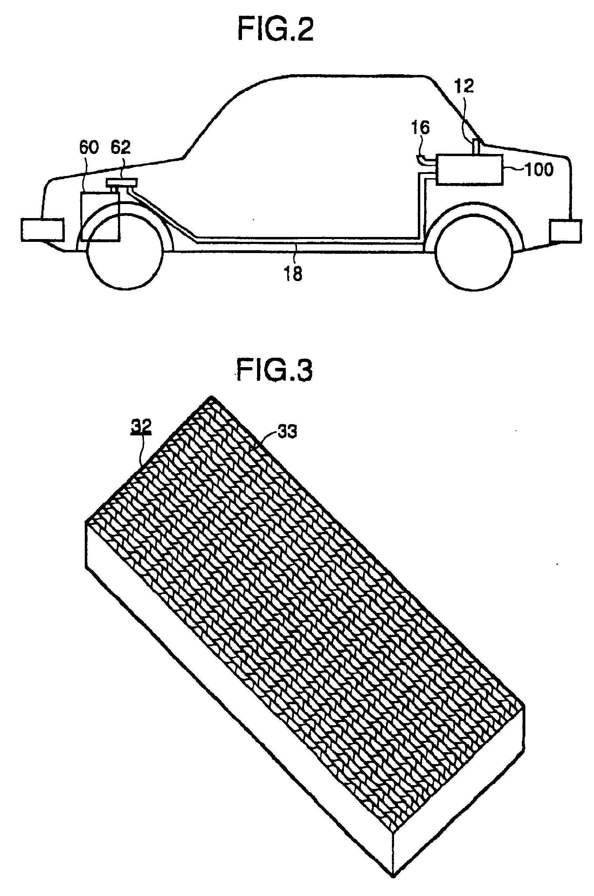

In this connection, Fig. 1 shows the structure of an air purifying apparatus 100 according to the first embodiment of the present invention. Further, Fig. 2 shows the mounting position of the air purifying apparatus 100 when it is adapted for use in an automobile for purifying the air inside the automobile compartment. In this case, the air purifying apparatus 100 is mounted inside the trunk room which is positioned at the rear side of the automobile compartment.

As shown in Fig. 1, the air purifying apparatus 100 has a purification passage 13 which includes an air intake port 12 for taking in air from the inside of the room or the automobile compartment, an outlet port (blow out port) 16 for blowing purified air back into the inside of the room or the automobile compartment and an exhaust port 18 which is switchable with the outlet port 16. In this regard, the outlet port 16 and the exhaust port 18 are switched by a damper 22.

As will be described in detail below, provided in the purification passage 13 are a first adsorption means 32 constructed from a photocatalyst filter for mainly removing NOx components and organic components such as aldehydes, ammonia and the like which are odor components found in tobacco smoke and the like from the air, and a second adsorption means 30 placed at the upstream side of the first adsorption means 32. The second adsorption means 30 is constructed from an adsorption filter for mainly removing neutral gas from the air. In this specification, the language "neutral gas" is used to mean any gases which are hard to be adsorbed by the photocatalyst filter 32. Examples of such gases include gases containing aromatic components or the like.

Provided between the photocatalyst filter 32 (first adsorption means) and the adsorption filter 30 (second adsorption means) is a light source (ultraviolet ray emitting source) 58 for irradiating ultraviolet light to these filters 32, 30 for activating the photocatalyst in the photocatalyst filter 32 and heating these filters 32, 30. In this embodiment, the light source 58 is constructed from an ultraviolet lamp, namely a metal halide lamp, but it is possible to use various lamps so long as they can activate the photocatalyst.

The ultraviolet lamp 58 is constructed so as to switch between outputs of 10W and 100W by means of a controlling device 55. Further, in this embodiment, the ultraviolet lamp 58 is arranged so as to irradiate the photocatalyst at 100W in order to raise the surface temperature of the photocatalyst from 80°C to 100°C. For this purpose, in this embodiment, the ultraviolet lamp 58 is arranged at a distance of 5cm from the first adsorption means (photocatalyst filter 32).

Further, an air feeding means 15 is arranged in the purifying path 13 at a position upstream from the adsorption filter 30 to draw in air from the air intake port 12 and forcedly feed such air through the adsorption filter 30 and the photocatalyst filter 32. This air feeding means 15 is equipped with a DC motor 40, a turbo fan 42 driven by the DC motor 40, and a motor controller 45 which controls the speed of rotation of the DC motor 40 to feed a required amount of air.

Furthermore, the air purifying apparatus 100 is provided with a reactivating means 17 which detects the saturated state of the photocatalyst filter 32 with the adsorbed substances and carries out a prescribed reactivation operation to reactivate the photocatalyst filter 32 when such a saturated state occurs. Namely, as the photocatalyst filter 32 adsorbs NOx components and the like over time, the photocatalyst filter 32 eventually becomes saturated with such adsorbed substances, thereby lowering the adsorptivity of the photocatalyst filter 32. For this reason, in this first embodiment, the air purifying apparatus 100 is provided with the reactivating means 17 for reactivating the photocatalyst filter 32. Further, in the same manner, as the adsorption filter 30 adsorbs neutral gas over time, the adsorptivity of the adsorption filter 30 goes down. Therefore the reactivating means 17 also functions to reactivate the adsorption filter 30 as well.

The reactivating means 17 is roughly constructed from a stabilizer 53 for lighting up the ultraviolet lamp 58, a temperature sensor 56 for measuring the temperature of the photocatalyst filter 32, a gas concentration sensor 46 for detecting the concentration of a prescribed gas in the air which is passed through the photocatalyst filter 32, and a control device 55 which receives signals from the temperature sensor 56 and the gas concentration sensor 46 and controls the stabilizer 53 and the motor controller 45 in response to the signals. In the present embodiment, the gas concentration sensor 46 is constructed into an NOx sensor to detect the concentration of NOx in the air. Further, the control device 55 also controls the opening and closing of the damper 22.

Further, when a lowering in the adsorptivity of the photocatalyst filter 32 is detected by the NOx sensor 46, a reactivation operation of the photocatalyst filter 32 is carried out. The reactivation operation is carried out by adjusting the rotational speed of the DC motor 40 by means of the motor controller 45 in accordance with signals sent from the control device 55 in order to either reduce the amount of the feeding air or stop supply of such air or intermittently supply such flow of air, and/or by increasing the intensity of the ultraviolet rays emitted by the ultraviolet lamp 58 by means of the stabilizer 53, so that the surface temperature of the photocatalyst filter 32 rises to eliminate the adsorbed substances and thereby reactivate the photocatalyst filter 32. In this case, when such operations are carried out to reactivate the photocatalyst filter 32, the surface temperature of the adsorption filter 30 is also forced to rise, thereby reactivating the adsorption filter 30 In the same manner. In this connection, the detection level of the NOx sensor 46 is preferably set to match the conditions for beginning a reactivation operation.

When this reactivation operation is carried out, the damper 22 is operated in accordance with signals from the control device 55 to open the exhaust port 18, whereby exhaust containing the eliminated Nox or the like is released to the outside of the room or the automobile compartment via the exhaust port 18. Further, in the case where the air purifying apparatus 100 is applied for use in an automobile as shown In Fig. 2, the NOx, HNO₃ and the like which are eliminated from the filters 32, 30 are forcedly fed to an air cleaner 62 of an engine 60, and then such eliminated (desorbed) substances undergo combustion in a combustion chamber and then they are fed to a catalytic converter rhodium 61 so as to be altered into harmless nitrogen which can safely be released into the environment outside the automobile.

Next, a detailed description will be given for the photocatalyst filter 32 (first adsorption means) and the adsorption filter 30 (second adsorption means).

The photocatalyst filter 32 which constitutes the first adsorption means includes a porous adsorbent such as activated carbon and a photocatalyst such as TiO₂. The porous adsorbent (activated carbon) is used for mainly adsorbing some odor components which are those found in tobacco smoke and which are difficult to be adsorbed by the photocatalyst in addition to Nox components except for NO. On the other hand, the photocatalyst is used for mainly adsorbing and oxidizing/decomposing NO, which is difficult to be adsorbed with activated carbon, and other organic components.

In particular, a photocatalyst made from TiO₂ can adsorb the NO in the air, which is difficult to be adsorbed with activated carbon, and oxidize/decompose such NO into NO₂ which can be adsorbed by the activated carbon. Further, the photocatalyst is also served to oxidize and/or decompose the main components of tobacco smoke such as aldehydes, ammonia and other organic components (odor components) which are difficult to be adsorbed with the activated carbon fibers that make up the adsorption filter 30, and finally alter them into water, carbon dioxide and nitric acid. For this reason, the air purifying apparatus 100 which uses such a photocatalyst is particularly suited for use in automobiles where the air to be purified contains a high concentration of NO.

Further, as is well known, in addition to adsorbing odor components such as tobacco smoke and the like, an adsorbent made from activated carbon has excellent adsorptivity for poisonous gases such as Nox (mainly NO₂) excepting NO, SOx and the like. In this connection, it is possible to use silicagel, activated alumina or zeolite or a combination thereof in place of the activated carbon.

The adsorbent and the photocatalyst may be arranged separately, but in the present embodiment the photocatalyst is carried by the activated carbon. Since the photocatalyst is carried by the activated carbon in this way, the NOx produced by being oxidized by the photocatalyst are immediately adsorbed by the activated carbon. This makes it possible to prevent the photocatalyst from being covered with such oxides, thereby enabling to to extend the life of the photocatalyst. Further, because the NOx components such as NO₂ and the like adsorbed by the adsorbent (activated carbon) are spread over the photocatalyst and they are oxidized an decomposed into nitrogen oxides such as nitric acid due to the photocatalytic reaction, the provision of the photocatalyst together with the activated carbon makes it possible to suppress the rate at which NOx components accumulate on the activated carbon. Accordingly, there is no need to frequently carry out an operation to eliminate adsorbed substances. Further, it is also possible to avoid the characteristics of the activated carbon from being altered by high temperature of heat that is added when the elimination operation is carried out. Therefore, it becomes possible to safely use the photocatalyst filter 32 over a long period of time without replacement. As described above, by having the photocatalyst to be carried by the activated carbon 32, a synergistic effect that both improve the adsorptivity and extend the life of the photocatalyst filter can be obtained.

In the present embodiment, TiO₂ is used as the photocatalyst, but it is possible to use various materials, so long as they can adsorb and oxidize/decompose NO and odor components mentioned above. For example, it is possible to use at least any one of the oxides of Cu, Zn, La, Mo, V, Sr, Ba, Ce, Sn, Fe, W, Mg and Al , and noble metals or combination thereof.

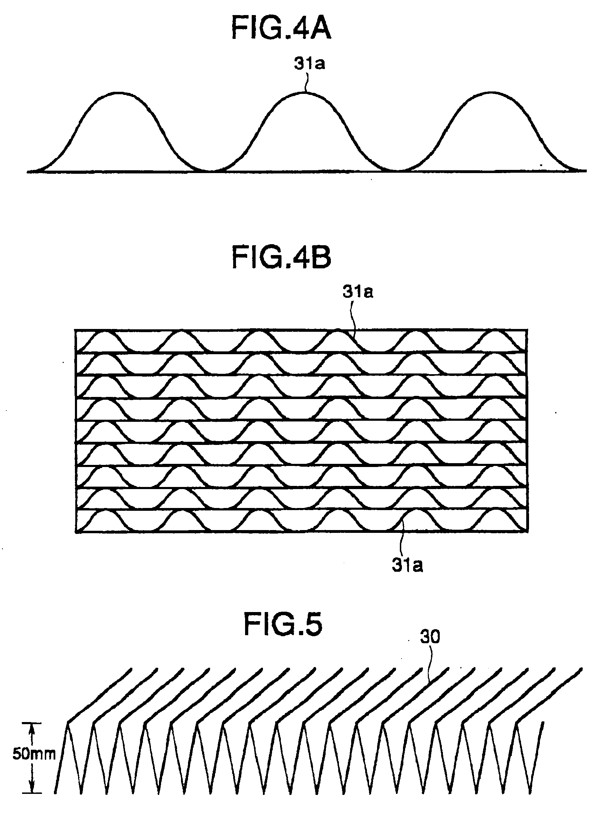

As shown in Fig. 3, the adsorbent and the photocatalyst in the photocatalyst filter 32 are provided on a metallic filter base member 33. The metallic filter base member 33 includes a plurality of filter elements each formed by folding thin stainless steel sheets 31a into a wave-shaped member as shown in Fig. 4(A). Then, the metallic filter base member 33 is constructed by stacking a plurality of such wave-shaped elements together, as shown in Fig. 4(B). Now, because a metallic filter base member 30 has excellent conductivity of heat, it is suitable for carrying out reactivation by heat. Further, when a metallic filter base member 30 is constructed as described above, it makes it possible to reduce losses in pressure, increase the surface area of the adsorbent, and achieve a very efficient ultraviolet irradiation.

In the above embodiment, even though the metallic filter base member 33 was described as being constructed from thin stainless steel sheets, it is possible to construct such a metallic filter base member 30 by replacing the stainless steel sheets with thin sheets of copper, aluminum or the like folded into a pleat-like shape. Further, it is also possible to construct such a metallic filter base member 30 by folding thin sheets of stainless steel, copper, aluminum or the like into an honeycomb-shaped structure. By constructing the metallic filter member in this way, it becomes possible to further reduce losses in pressure and increase the surface area of the adsorbent, and achieve an even more efficient ultraviolet irradiation.

Further, in place of the metallic filter base member 30, it is possible to construct a filter base member from other nonburnable materials, such as ceramic, for example. Further, it is also possible to construct the photocatalyst filter 32 from a honeycomb-shaped structure formed of a mixture of titanium oxide (TiO₂) and activated carbon without using such a filter base member. Furthermore, it is also possible to have a photocatalyst to be carried by other adsorbent such as activated carbon fibers, silica gel or the like.

Now, as was described above, when the adsorptivity goes down, the photocatalyst of the photocatalyst filter 32 is activated by irradiation with ultraviolet rays emitted from the ultraviolet lamp 58, and as heating occurs, the adsorbed substances are eliminated and thereby reactivation of the photocatalyst filter 32 takes place. Therefore it becomes possible to reuse the photocatalyst repeatedly for a long time. Further, by being heated in the same way, the substances adsorbed by the activated carbon are also decomposed, so that the activated carbon is also reactivated.

Further, as shown in Fig. 5, the adsorption filter 30 which constitutes the second adsorption means includes an activated carbon fiber product 31 which is fomred by folding the activated carbon fiber sheet into a pleat-shaped structure having a width and length of 200mm x 200mm and a height of 50mm. In addition to adsorbing neutral gases which are difficult to be adsorbed with the photocatalyst filter 32, the activated carbon fiber product 31 strongly adsorb odors in tobacco smoke which are difficult to be adsorbed by the photocatalyst and the like. Examples of such odors include NO₂ and SOx and the like. Further, by folding the activated carbon fiber sheet into the pleat-shaped structure as shown in Fig. 5 so as to have a large surface area (0.8m²), it is possible to lower the speed of the air passing therethrough, and reduce losses in pressure.

For the activated carbon fiber product 31, it is possible to use "Fine Guard" (registered trademark) manufactured by Toho Rayon Inc. which employees acrylic fibers as a base material. The characteristics of the activated carbon fiber product sold as "Fine Guard" include a specific surface area of 500 - 1200m²/g, an average pore diameter of 20 - 40µm, a fiber diameter of 7 - 15µm, a tensile strength of 20 - 50kg/mm², an N content percentage of 2 - 10%, an external surface area of 0.2 - 0.7m²/g, and a benzene equilibrium adsorption of 20 - 50%. In the present embodiment, the felt-shaped FE-200 (roughness of mesh is 100g/m²) is used by folding it into a pleat-shaped structure.

As described above, when the photocatalyst filter 32 is being reactivated, the activated carbon fiber product 31 is also heated by the ultraviolet rays from the ultraviolet lamp 58, thereby eliminating the adsorbed substances to reactivate the activated carbon fiber product 31, thus making it possible to reuse the activated carbon fiber product 31 repeatedly.

Furthermore, the adsorption filter 30 and the photocatalyst filter 32 may be provided in the purification passage 13 in such a way as to be removable therefrom.

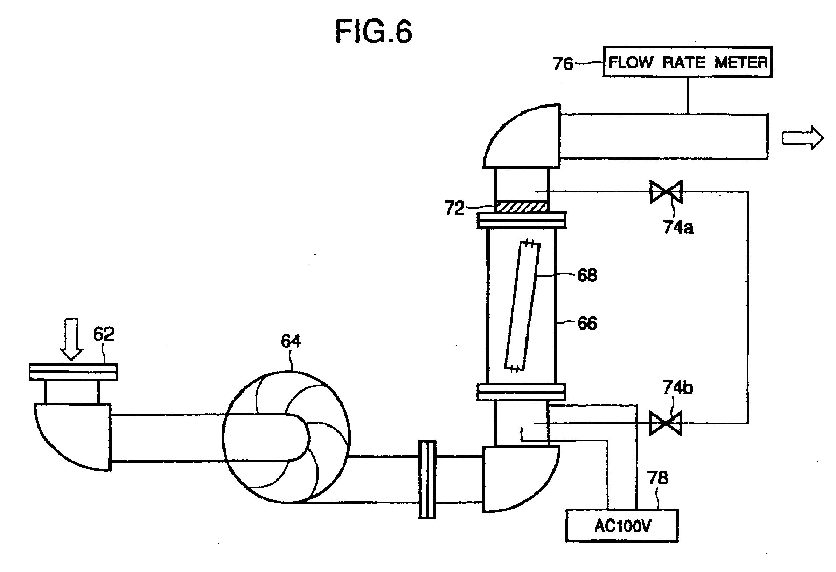

Next, with reference to Figs. 6 - 11, the results of tests carried out on the photocatalyst filter 32 of the present invention to determine its ability to remove NOx components, especially NO, will be given below.

Fig. 6 shows the testing apparatus used to test the ability of a photocatalyst filter at removing NOx especially NO. This testing apparatus draws in air containing NO gas from an intake port 62, and forcedly feeds such air to a column 66 by means of a turbo blower 64. A photocatalyst filter 72 is arranged downstream from the column 66, and an ultraviolet lamp (sterilizing lamp) 68 for irradiating the photocatalyst filter 72 with ultraviolet rays is arranged inside the column 66. Further, an aluminum foil shield is provided on the inner circumferential surface of the column 66. Also provided is a stabilizer 78 which supplies power at 100V AC to the ultraviolet lamp 68. Further, NOx concentration measuring meter 74 is connected to the inlet and the outlet of the column 66 via valves 74a, 74b, and a flow rate meter 76 is arranged downstream from the column 66.

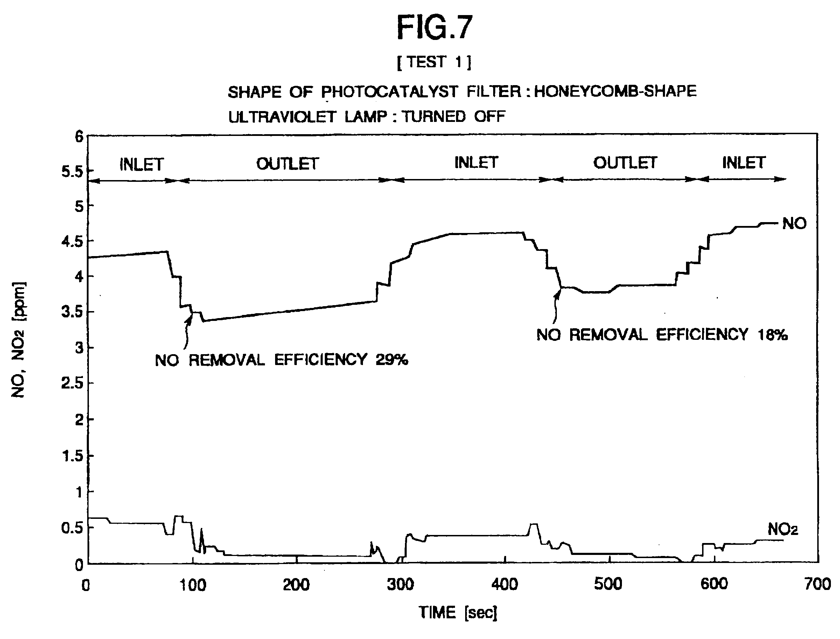

First, with reference to Fig. 7, a description of the measurements carried out to determine the ability of the photocatalyst filter 72 at removing NOx especially NO will be given for the case in which the ultraviolet lamp 68 is not lit up. In this experiment ([TEST 1]), the photocatalyst filter 72 also includes TiO² (photocatalyst) and activated carbon in the same manner as that of the photocatalyst filter 32 of the first embodiment. However, in this testing apparatus, a mixture of TiO² and activated carbon is formed into a honeycomb-shaped structure to form the photocatalyst filter 72. Further, by carrying out switching operations on the valves 74a, 74b, the NO concentration was alternately measured at the inlet of the column 66 (i.e., at a position upstream from the photocatalyst filter 72) and at the outlet of the column 66 (i.e., at a position downstream from the photocatalyst filter 72). These measurements were carried out at a flow rate of 3 liters/minute.

In this experiment, the NO concentration at the inlet after 80 seconds was 4.4ppm, and the NO concentration at the outlet after 100 seconds was 3.1ppm, which shows an initial NO removal efficiency of 29%. Then, as time elapsed, the adsorptivity of the photocatalyst filter 72 went down. Namely, the NO concentration at the inlet after 400 seconds was 4.5ppm and the NO concentration at the outlet after 430 seconds was 3.7ppm, which shows a drop in NO removal efficiency to 18%. The results of this experiment show that the photocatalyst filter 72 can adsorb NO even when the photocatalyst filter 72 is not being irradiated with ultraviolet rays, but that the photocatalyst filter under this condition is saturated in a short time.

In this regard, it should be noted that NO₂ is also generated due to oxidation of NO, but such NO₂ is removed by the activated carbon contained in the photocatalyst filter 72.

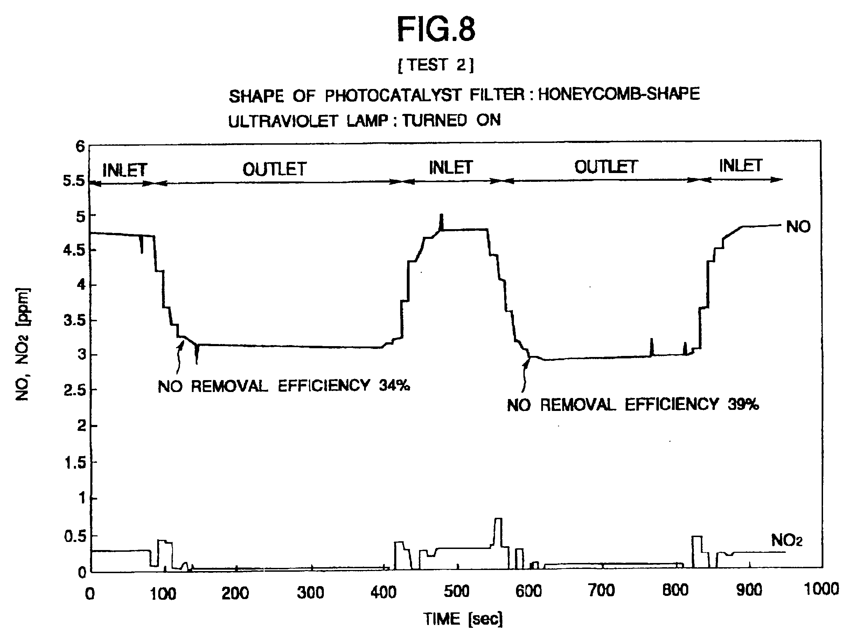

Next as shown in Fig. 8, an experiment was carried out to measure the NO removing ability of the photocatalyst filter 72 for the case in which the ultraviolet lamp 68 is lit up at 6W. In this experiment ([TEST 2]), the NO concentration at the inlet after 80 seconds was 4.7ppm, while the NO concentration at the outlet after 100 seconds was 3.1ppm, which shows an initial NO removal efficiency of 34%. Then, as time elapsed, the NO concentration at the inlet after 500 seconds was 4.5ppm and the NO concentration at the outlet after 590 seconds was 2.745ppm, which shows an increase in NO removal efficiency to 39%. The results of this experiment show that the photocatalyst filter 72 can continue to adsorb NO over a relatively long period of time when irradiated with ultraviolet rays. This is because NO is removed by photocatalytic reaction caused by the irradiation of the ultraviolet rays. Further, NO2 is also removed by adsorbing ability of the activated carbon in the same manner as is the case shown in Fig. 7.

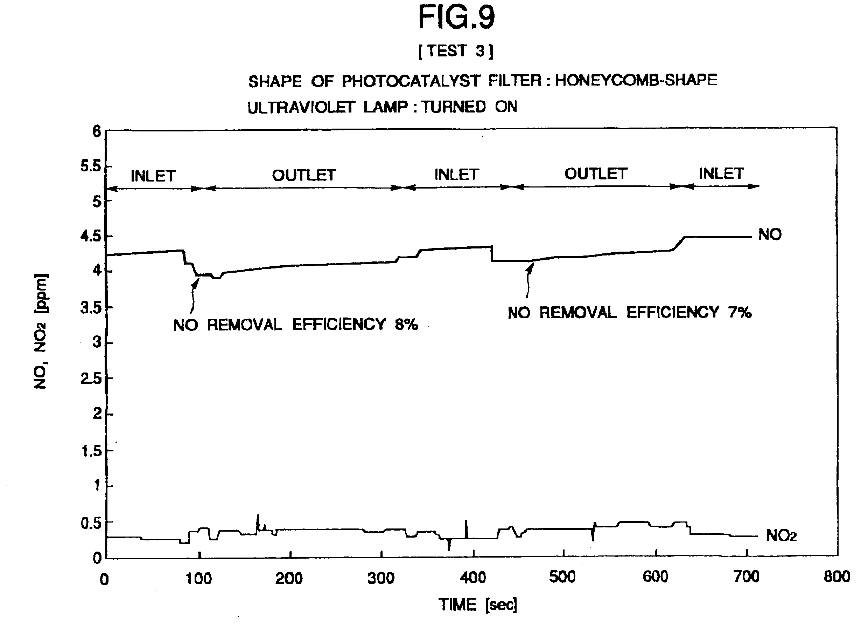

Next, as shown in Fig. 9, an experiment was carried out to measure the NO removing ability of the photocatalyst filter 72 for the case in which the photocatalyst filter 72 contains only a small amount of TiO₂ relatively to the above-identified two cases. In this experiment ([TEST 3]), the NO concentration at the inlet after 80 seconds was 4.1ppm, while the NO concentration at the outlet after 100 seconds was 3.77ppm, which shows an initial NO removal efficiency of 8%. Then, as time elapsed, the NO concentration at the inlet after 400 seconds was 4.1ppm and the NO concentration at the outlet after 500 seconds was 3.81ppm, which shows a decrease in NO removal efficiency to 7%. The results of this experiment show that when only a small amount of photocatalyst is used, the adsorbing ability thereof is gradually lowered. This is because the photocatalyst is being gradually saturated as the amount of NO to be adsorbed to the photocatalyst exceeds the NO oxidizing ability of the photocatalyst.

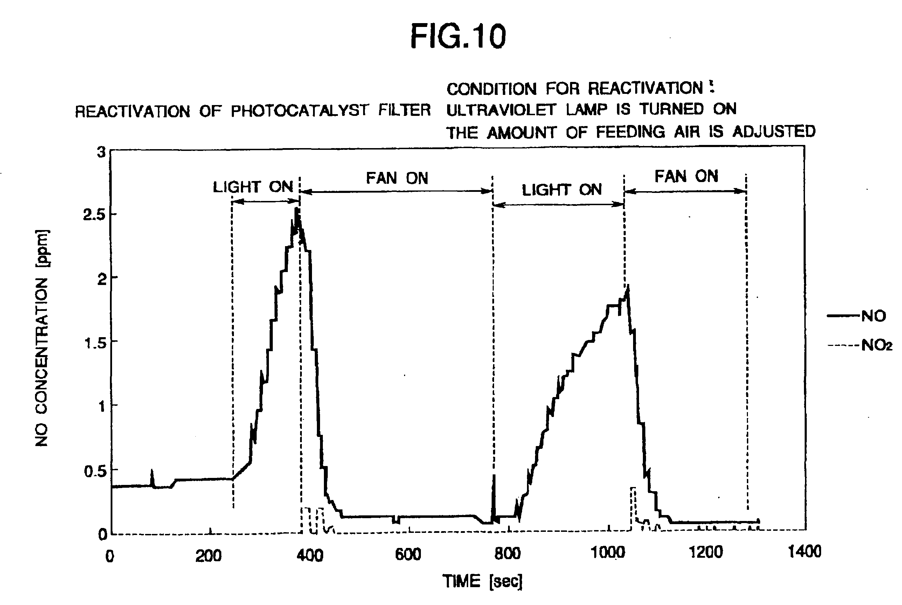

Next, as shown in Fig. 10, another test was carried out to know elimination of NO from the photocatalyst filter 72 by irradiating the photocatalyst filter 72 with ultraviolet light from the ultraviolet lamp 68 and heating it with the heat of the light. In this experiment, the photocatalyst filter 72 was heated by raising the ultraviolet ray output of the ultraviolet lamp 68 to 100W to irradiate the photocatalyst filter 72 with relatively high intensity ultraviolet rays, and by reducing the amount of feeding air fed by the turbo blower 64. Then, air which does not contain any NO is introduced and forcedly fed to the photocatalyst filter 72 and then NO concentration in the air which has passed through the photocatalyst filter 72 was measured.

In this experiment, by irradiating the photocatalyst filter 72 with the relatively high intensity ultraviolet rays and by reducing the amount of the feeding air fed by the turbo blower 64, the surface temperature of the photocatalyst filter 72 was raised to 80°C, and thereby the concentration of NO rose from 0.4ppm to 2.5ppm. Namely, this experiment shows that NO can be eliminated from the photocatalyst filter 72 by heating it.

In this connection, an experiment in which a photocatalyst is irradiated with ultraviolet rays to decompose NOx and odor components by means of photocatalytic reactions, an experiment in which the photocatalyst is reactivated by irradiation with ultraviolet rays, and an experiment in which the photocatalyst is reactivated by heating are described in various literatures. In this regard, however, such literatures state that the speed of reactions are very slow if only irradiation which can not raise the temperature of the photocatalyst is carried out, and further state that heat reactivation of the photocatalyst requires temperatures of several hundred degrees Celsius (°C).

However, in the above experiments conducted by the present inventors, it was turned out that photocatalytic reactions could be promoted and heat reactivation of the photocatalyst could be carried out at a temperature of approximately 80°C (with the possible range of temperatures being 80°C - 100°C) generated by a single ultraviolet lamp . Further, as was mentioned above with reference to Fig. 10, by both carrying out irradiation with ultraviolet rays and adjusting the amount of the feeding air to carry out heating, it was also confirmed that the temperature of the photocatalyst filter could be raised rapidly to quickly eliminate adsorbed NO.

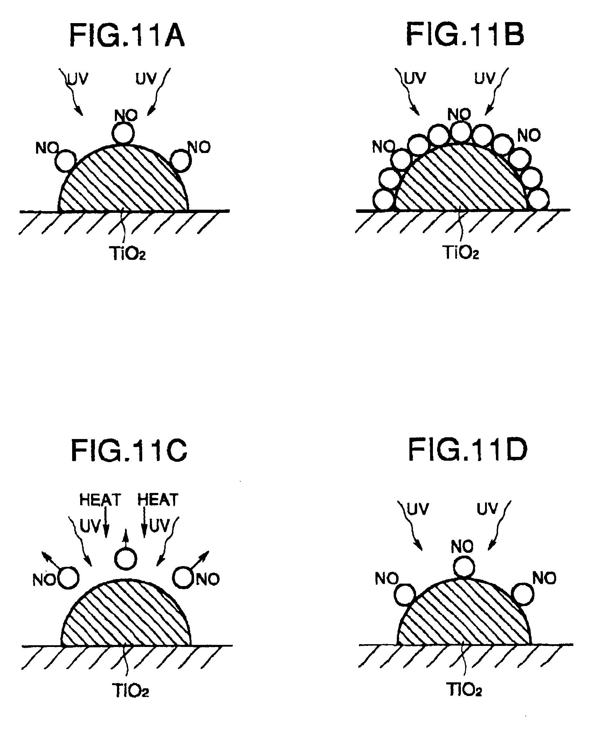

Next, the supposed reason why combined irradiation and heating with ultraviolet rays makes it possible to quickly eliminate adsorbed NO will be explained with reference to the conceptual drawings in Fig. 11. As shown in Fig. 11(A), before the photocatalyst comprised of TiO₂ adsorbs a large amount of NO, the surface thereof is directly irradiated with ultraviolet rays, and this makes it possible for the photocatalyst TiO₂ to have a relatively high effectiveness at adsorbing and oxidizing NO, However, as time passes, the photocatalyst TiO₂ becomes covered with NO molecules, as shown in Fig. 11(B), and this makes it difficult for the ultraviolet rays to reach the surface of the photocatalyst. As a result, the photocatalytic reactions are slowed down, and in this state the effect of reactivation is low even when irradiated with ultraviolet rays.

At this point, as was described above with reference to Fig. 10, if the photocatalyst TiO₂ is irradiated and heated with ultraviolet rays as shown in Fig. 11(C), it is possible to efficiently eliminate the adsorbed NO molecules. This is because the adsorbed NO molecules are eliminated from the photocatalyst or oxidized into NO₂ and then eliminated therefrom when the photocatalyst is heated. Thus, by eliminating the NO molecules that have been adsorbed to the surfaces of TiO₂ in this way, it is possible to directly irradiate the surface of the photocatalyst of TiO₂ with ultraviolet rays and thereby enables to activate photocatalytic reactions. As shown in Fig. 11(D), by carrying out such a reactivation operation, it is possible to reuse the photocatalyst of TiO₂ again to remove NO.

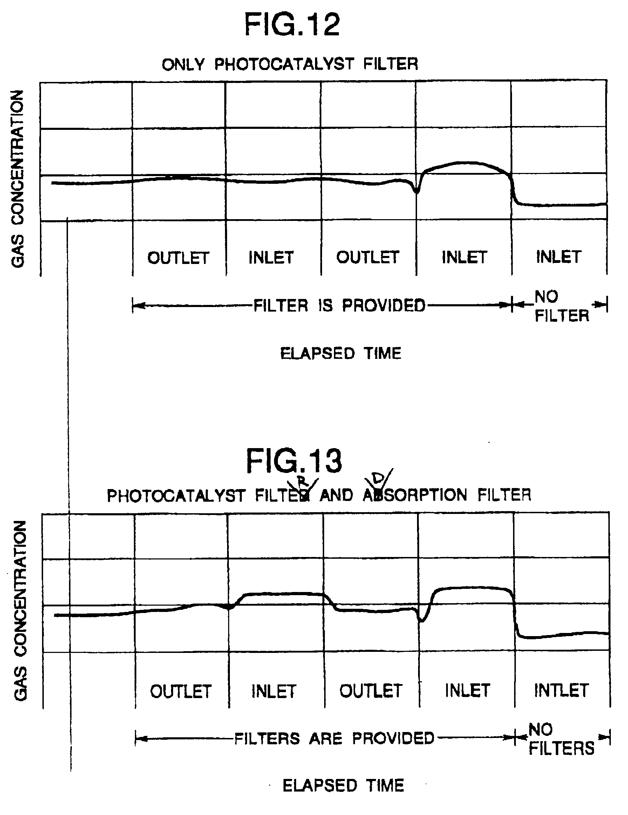

Next, with reference to Figs. 12 and 13, the results of tests carried out on the photocatalyst filter 72 and an adsorption filter to determine their abilities to remove a neutral gas will be given below. First, Fig. 12 is a graph which shows the results of the neutral gas adsorption test which was carried out using the photocatalyst filter 72 described above with reference to Figs. 6 - 10 alone. In the adsorption test shown in Fig. 12, an aromatic substance sold for household use was used as the neutral gas. As shown in this drawing, measurements were alternately carried out at the outlet and the inlet, wherein the neutral gas concentration is plotted on the vertical axis and elapsed time is plotted on the horizontal axis. As can be seen from such measurement results, the photocatalyst filter 72 which uses TiO₂ adsorbed hardly any neutral gas.

Next, Fig. 13 is a graph which shows the result of the other neutral gas adsorption test which was carried out using an adsorption filter in addition to the photocatalyst filter 72. In this case, the adsorption filter is arranged upstream from the photocatalyst filter 72 and it is constructed from activated carbon fibers so as to be essentially the same as the adsorption filter 30 described above. The measurement results clearly show different concentrations at the inlet and the outlet, which shows that the adsorption filter can remove such neutral gas.

As can be seen from these experiments, by providing the neutral gas adsorption filter 30 in addition to the photocatalyst filter 32, as described above for the embodiment shown in Fig. 1, it is possible to effectively remove neutral gases in addition to removing NO from the air.

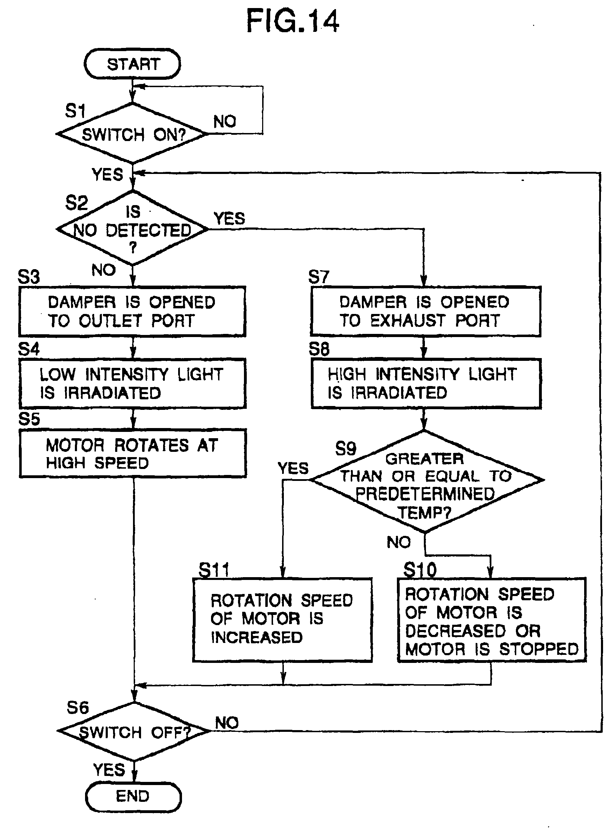

Next, with reference to the flow chart shown in Fig. 14, a description of the operation of the air purifying apparatus 100 shown in Fig. 1 will be given. In this regard, it is to be noted that the operation of the air purifying apparatus is actually being carried out by means of control by the control device 55 of the reactivation means 17.

First, when a starter switch (not shown in the drawings) is turned on (i.e., a "Yes" determination at S1), if a "No" determination is made at Step 2 (S2), the process proceeds to Step 3 (S3) where the control device 55 of the air purifying apparatus 100 carries out an operation to open the damper 22 to the outlet port 16 so as to be able to blow purified air into the inside of the room or the automobile compartment. Next, at Step 4 (S4), the ultraviolet lamp 58 is operated at the relatively low output of 10W to irradiate the adsorption filter 30 and the photocatalyst filter 32 with the relatively low intensity ultraviolet rays. Then, at Step 5 (S5), the DC motor 40 is operated at high speed to begin forcedly feeding of air which is taken in from the air intake port 12 toward the adsorption filter 30. In this way, the air which is taken in from the inside of the room or the automobile compartment is forcedly fed so as to pass through the adsorption filter 30 to remove neutral gases contained in the air as was described above with reference to Fig. 13. Then, the feeding air also passes through the photocatalyst filter 32, where NO and other NOx components are adsorbed and removed by the photocatalyst filter 32, and then the air which has thus purified is blown back into the inside of the room or the automobile compartment. This purifying operation continues until the starter switch is turned off (i.e., a "Yes" determination at S6).

Now, when the adsorptivity of the photocatalyst filter 32 goes down as a result of adsorbing NOx and the like, the NOx sensor 46 detects NOx, whereupon a "Yes" determination is made at Step 2 (S2), and then the process proceeds to Step 7 (S7) to begin an operation to eliminate adsorbed substances (i.e., to reactivate the photocatalyst filter 32). In this case, first, by means of a signal sent from the control device 55, the damper 22 is opened to the exhaust port 18 to enable exhaust containing the eliminated (desorbed) substances to be released to the outside of the room or the automobile compartment (S7). Next, at Step 8 (S8), by means of a signal sent from the control device 55, the ultraviolet lamp 58 is operated at the relatively high output of 100W to irradiate the adsorption filter 30 and the photocatalyst filter 32 with the relatively high intensity ultraviolet light. Then, at Step 9 (S9), the temperature sensor 56 is used to determine whether or not the surface temperature of the photocatalyst filter 32 is greater than or equal to a prescribed temperature value (e.g., 80°C). At this point, until the surface temperature of the photocatalyst filter 32 reaches 80°C (i.e., while a "No" determination is made at S9), the process proceeds to Step 10 (S10) in which the DC motor 40 is either stopped or the rotation speed thereof is reduced. (In this connection, it is to be noted that the prescribed temperature value may lie in the range 80°C - 100°C.)

In this way, as was described above with reference to Fig. 10, as the surface temperature of the photocatalyst filter 32 rises to 80°C, the activity of the photocatalyst goes up, whereby the NO, NOx and the like adsorbed by the photocatalyst and the activated carbon are eliminated by means of oxidation and/or decomposition thereof, so that the photocatalyst filter 32 is reactivated. Similarly, such irradiation with ultraviolet rays also raises the temperature of the adsorption filter 30, whereby the adsorption filter 30 is also reactivated by the elimination of the adsorbed neutral gases. In this reactivation operation, when the surface temperature of the photocatalyst filter 32 rises above 80°C, a "Yes" determination is made at Step 9 (i.e., it is determined that the temperature exceeds the prescribed temperature value) and the process proceeds to Step 11 (S11), and then the DC motor 40 is operated at high speed to lower the temperature of the photocatalyst filter 32 to 80°C. Namely, in Steps 9, 10 and 11, the rotational speed of the DC motor 40 is changed to adjust the amount of the feeding air, thereby maintaining the surface temperature of the photocatalyst filter 32 at 80°C. This makes it possible to continuously eliminate adsorbed substances from the photocatalyst under the appropriate temperature. Then, when such elimination process has been completed and the concentration of NOx has been lowered, a "No" determination is made at Step 2 (S2) and the process proceeds to Step 3 (S3) to once again begin an air purifying process described above.

In this embodiment, because the photocatalyst and the activated carbon are used with being reactivated by eliminating adsorbed substances therefrom, the photocatalyst and the activated carbon can continuously purify air over a long period of time without the need for replacement. Furthermore, because high heat is not required at the time when an operation for eliminating adsorbed substances is carried out, there is no deterioration of the photocatalyst and the activated carbon. Further, no special heating device is required when carrying out an operation to eliminate adsorbed substances from the photocatalyst and the activated carbon. Further, because the ultraviolet lamp 58 is operated at a low power output of 10W when not carrying out a reactivation operation, the air purifying apparatus according to this embodiment is quite economical with regards to power consumption.

Further, even though the rotational speed of the turbo fan 42 was reduced to lower the amount of feeding air during reactivation of the photocatalyst filter 32 and the adsorption filter 30 in the embodiment described above, it is also possible to lower the amount of the feeding air by intermittently creating an air flow. Further, even though a reactivation operation was described for the embodiment above as being carried out when the NOx sensor confirms a lowering in the adsorptivity upon detecting a predetermined concentration of NOx, it is also possible to have a reactivation operation carried out every time when a prescribed period of time elapses or every time when the air purifying apparatus 100 begins an air purifying operation.

Further, it is possible to construct the first adsorption means (photocatalyst filter 32) in the embodiment above from just an adsorbent made from activated carbon without using any photocatalyst. In this case, when the adsorptivity of the adsorbent goes down, it is also possible to heat and reactivate the adsorbent in the same way by irradiating the adsorbent with ultraviolet rays emitted from an ultraviolet lamp and adjusting the amount of the feeding air by the air feeding means (i.e., by reducing the rotational speed of the motor, by stopping the motor, or by intermittently carrying out air feeding). In this case, the amount of the feeding air by the air feeding means can be used to adjust and maintain the raised temperature at a prescribed temperature suited for reactivation of the activated carbon, thus making it possible to effectively reactivate the activated carbon without altering its characteristics. Further, it is possible to use a heating means such as a heater or the like to heat the activated carbon instead of the ultraviolet lamp, and to maintain a prescribed raised temperature suited for reactivation for the activated carbon by adjusting the amount of the feeding air by the air feeding means.

Hereinafter, a detailed description of the second embodiment of the air purifying apparatus according to the present invention will be given.

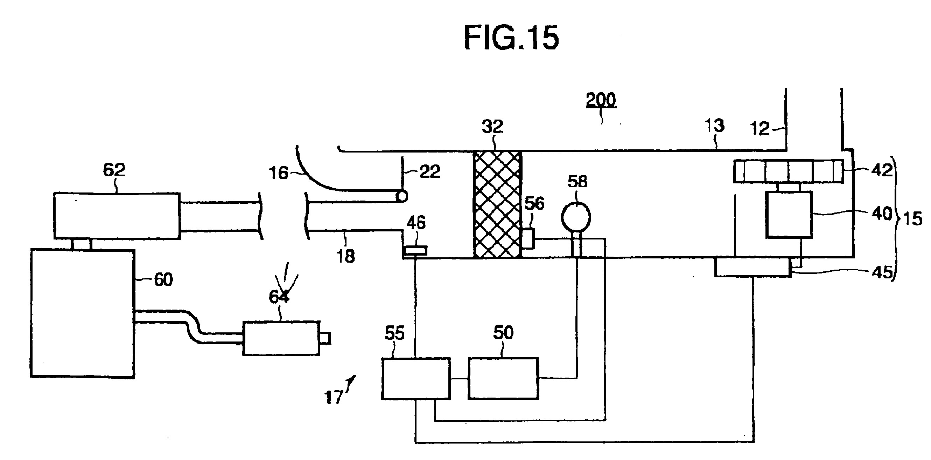

Fig. 15 shows the structure of the air purifying apparatus 200 or the second embodiment. When this air purifying apparatus 200 is applied for an automobile, it is mounted above a trunk room positioned at the rear side of an automobile compartment and an exhaust port 18 thereof is coupled to an air cleaner 62 of an engine 60 as described hereinbelow as shown in Fig. 2.

The air purifying apparatus 200 of the second embodiment has substantially the same structures as those of the air purifying apparatus 100 of the first embodiment excepting that only one adsorbing means which is constructed from a photocatalyst filter 32 is used and a light source (ultraviolet lamp) is constructed so as not to be able to change the intensity of light emitting therefrom. Therefore, the same reference numerals as those in the first embodiment are used to designate the same or corresponding components or parts.

In more details, as illustrated in Fig. 15, in the same manner as the first embodiment, the air purifying apparatus 200 has a purification passage 13 which includes an air intake port 12 for taking in air from the the inside of the room or the automobile compartment, an outlet port (blow out port) 16 for blowing purified air back into the inside of the room or the automobile compartment and an exhaust port 18 which is switchable with the outlet port 16. In this regard, the outlet port 16 and the exhaust port 18 are switched by a damper 22. This exhaust port 18 is coupled to the cleaner 62 of the engine 60 when the air purifying apparatus 200 is adapted for use in an automobile.

Provided in the purification passage 13 is an adsorption means 32 constructed from a photocatalyst filter. The photocatalyst filter 32 is provided with a porous adsorbent such as activated carbon for mainly adsorbing odor components such as those found in tobacco smoke and the like as well as other odor components such as NOx excepting than NO, and a photocatalyst such as TiO₂ for adsorbing and oxidizing/decomposing NO and other organic substances which are difficult to be adsorbed by the activated carbon. Since the details of the activated carbon and the photocatalyst are the same as those of the photocatalyst filter 32 of the first embodiment, further explanations are omitted.

At the upstream side of the photocatalyst filter 32, there is provided a light source (ultraviolet ray emitting source) 58 for irradiating ultraviolet rays to the photocatalyst filter 32 for activating and heating the photocatalyst in the photocatalyst filter 32. In this embodiment, the light source 58 is constructed from an ultraviolet lamp, namely a metal halide lamp. This ultraviolet lamp 58 is constructed and arranged in the same manner as the ultraviolet lamp 58 of the first embodiment excepting that it can not change the intensity of ultravioket rays emitting therefrom.

Further, an air feeding means 15 is arranged in the purifying path 13 at a position upstream from the photocatalyst filter 32 to draw in air from the air intake port 12 and forcedly feed such air through the photocatalyst filter 32. As is the same as the first embodiment, this air feeding means 15 is equipped with a DC motor 40, a turbo fan 42 driven by the DC motor 40, and a motor controller 45 which controls the speed of rotation of the DC motor 40 to feed a required amount of air.

Furthermore, as is the same as the first embodiment, the air purifying apparatus 200 is provided with a reactivating means 17 which detects the saturated state of the photocatalyst filter 32 with the adsorbed substances and carries out a prescribed reactivation operation to reactivate the photocatalyst filter 32 when such a saturated state occurs. Namely, the adsorptivity of the photocatalyst filter 32 becomes lowered if the photocatalyst filter 32 continues to adsorb NOx components and the like over time. For this reason, the air purifying apparatus 200 of the second embodiment is also provided with a reactivating means 17 for the photocatalyst filter 32.

As will be described in more details below, this reactivating means 17 is operated so as to reduce the amount of the feeding air or stop the supply of the feeding air to rise the temperature of the photocatalyst filter 32 so that the adsorbed substances be eliminated from the photocatalyst and activated carbon, when the adsorptivity of the photocatalyst filter 32 is lowered and thereby a reactivation of the photocatalyst filter 32 becomes necessary.

As is the same as that of the first embodiment, the reactivating means 17 is roughly constructed from a stabilizer 53 for lighting up the ultraviolet lamp 58, a temperature sensor 56 for measuring the temperature of the photocatalyst filter 32, a NOx sensor 46 for detecting the concentration of NOx in the air which is passed through the photocatalyst filter 32, and a control device 55 which receives signals from the temperature sensor 56 and the NOx sensor 46 and controls the stabilizer 53 and the motor controller 45 in response to the received signals. Further, the control device 55 also controls the opening and closing of the damper 22.

Further, when a lowering in the adsorptivity of the photocatalyst or the activated carbon in the photocatalyst filter 32 is detected by the NOx sensor 46, a reactivation operation of the photocatalyst filter 32 is carried out. The reactivation operation is carried out by adjusting the speed of the DC motor 40 by means of the motor controller 45 in accordance with signals sent from the control device 55 in order to either reduce the amount of the feeding air or stop the supply of such feeding air or intermittently supply of such feeding air. In this way, the surface temperature of the photocatalyst filter 32 is raised by the irradiation of ultraviolet rays emitted from the ultraviolet lamp 58 to activate the photocatalyst so that oxidization and decomposition by the photocatalyst are promoted and the adsorbed substances are eliminated to reactivate its adsorptivity. Further, the odor components such as NOx or the like which have been adsorbed by the reactivated carbon are also eliminated.

When such an eliminating operation is carried out, the damper 22 is operated to open, and the NOx, HNO₃ and the like which have been eliminated from the photocatalyst and the activated carbon are forcedly fed to the air cleaner 62 of the engine 60, and then such substances undergo combustion in a combustion chamber and then they are fed to a catalytic converter rhodium 61 so as to be altered into harmless nitrogen which can safely be released into the environment outside the automobile.

As was described above, the photocatalyst filter 32 is constructed so as to be reactivated with the ultraviolet rays from the ultraviolet lamp 58 by adjusting the amount of the feeding air from the air feeding means 15 ((i.e., by reducing the rotational speed of the motor, by stopping the motor, or by intermittently carrying out such air feeding) in the case where the adsorptivity of the photocatalyst 32 is lowered due to the saturation by the adsorbed substances.

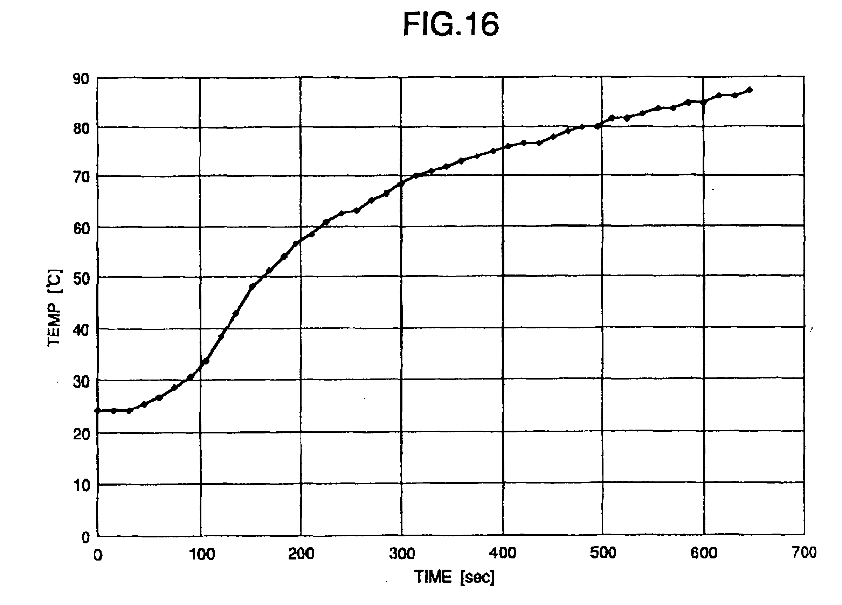

In this connection, Fig. 16 is a graph which shows changes in the temperature at the surface of the photocatalyst filter 32 over time, when the feeding of the air has been stopped or interrupted to prevent the photocatalyst filter 32 from cooling under the condition that the photocatalyst filter 32 is irradiated with ultraviolet light emitted from the ultraviolet lamp 58. As can be seen from this graph, the temperature at the surface of the photocatalyst filter 32 rises from 25°C at the moment when the feeding of air is stopped to 80°C after 500 seconds have elapsed. Namely, as described in the above, in this embodiment, the photocatalyst filter 32 is heated only by adjusting the amount of the feeding air with maintaining the intensity of the ultrabiolet rays emitted from the ultraviolet lamp 58 at an output of 100W.

In the air purifying apparatus 200 of this second embodiment, since only one photocatalyst filter 32 is provided and the ultraviolet lamp 58 is constructed so as to irradiate light having a constant intensity, there are advantages that structures thereof can be quite simple and therefore the controlling operation for the reactivation can be performed easily.

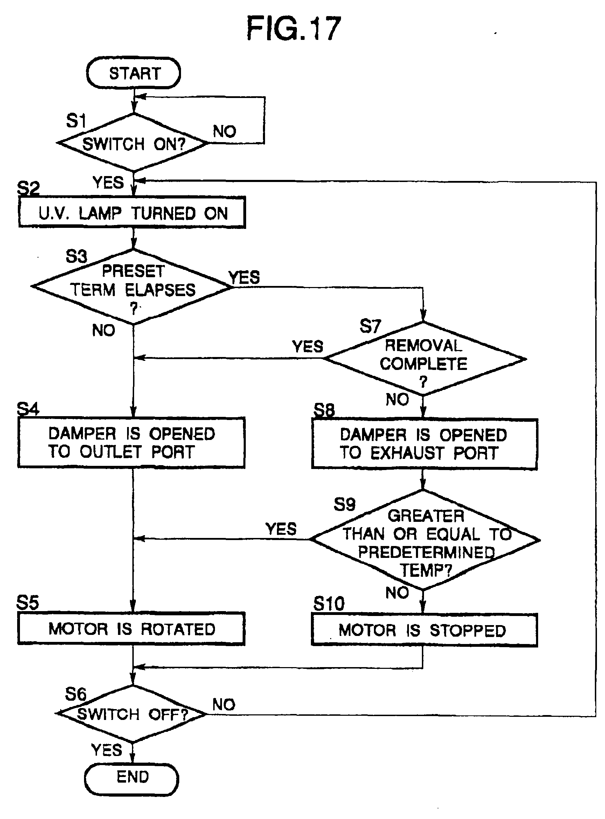

Next, the operation of the air purifying apparatus 200 according to the second embodiment will be given with reference to the flow chart shown in Fig. 17. In this regard, it is to be noted that the operation of the air purifying apparatus of this embodiment is actually being carried out by means of control by the control device 55 of the reactivation means 17.

First, upon determining that a starter switch (not shown in the drawings) has been turned on by an operator (i.e., a "Yes" determination at step S1), the control device 55 of the automobile air purifying apparatus 200 lights up the ultraviolet lamp 58 to irradiate the photocatalyst filter 32 with ultrabiolet rays (step S2). Next, the control device 55 determines whether or not a predetermined amount of time (e.g., 10 hours of total usage) has elapsed since the last time when an elimination process was performed to eliminate adsorbed substances by the photocatalyst filter (step S3).

At this point, if it is determined that a predetermined amount of time has not yet elapsed (i.e. a "No" determination at step S3), an operation to purify the air in the inside of the room or the automobile compartment is begun. In this case, the damper 22 is operated to open the outlet port 16 so as to be able to blow purified air into the inside of the room or the automobile compartment (step S4). Next, the DC motor 40 is turned on to begin taking in air from the inside of the room or the automobile compartment (step S5). When this is done, the air which is taken in from the inside of the room or the automobile compartment is fed to the photocatalyst filter 32 to pass therethrough, where the photocatalyst adsorbs and oxidize/decompose NO in the air while oxidize and decompose other odor components such as aldehydes and ammonia and the activated carbon adsorbs NOx or the like. In this way, the air is purified and then blown back into the inside of the room or the automobile compartment. This purification operation will continue until the starter switch is turned off (i.e., a "Yes" determination at step S6).

On the other hand, if it is determined at step S3 that a predetermined amount of time has elapsed since the last reactivation operation of the photocatalyst filter 32 (i.e., a "Yes" determination at step S3), an elimination process to eliminate adsorbed substances that is a reactivation of the photocatalyst filter 32 is begun. In this case, as shown in the flow chart of Fig. 17, after a "No" determination is made at step S7, the damper 22 is operated to open the exhaust port 18 which communicates with the air cleaner 62 of the engine 60 in order to allow exhaust containing the eliminated substances and the like to be sent to the engine 60 (step S8). Then, the process proceeds to step 9 (S9) to determined as to whether or not the temperature at the surface of the photocatalyst filter 32 exceeds a predetermined temperature (e.g. 80°C). In this case, since the photocatalyst filter 32 is cooled by the feeding air supplied by the DC motor 40, the judgement at step 9 becomes "No". As a result, the process moves to the step 10 (S10) to stop the DC motor 40 and terminate supply of the feeding air.

Then, as was described above with reference to Fig. 16, the temperature at the surface of the photocatalyst filter 32 rises approximately to the predetermined temperature of 80°C, which activates the photocatalyst and then oxidizes and decomposes the NO or the like which have been adsorbed by the photocatalyst filter 32 to eliminate them from the photocatalyst filter 32. Further, in the same manner, the activated carbon is also heated, thereby the adsorbed substances such as NOx and the like are also eliminated from the activated carbon.

Now, if the temperature sensor 56 detects that the surface temperature of the adsorption filter 30 rises above the prescribed temperature of 80°C (i.e., a "Yes" determination at step S9), the process moves to step S5 where the DC motor 40 is turned on to cool the surface of the photocatalyst filter 32 so as to be less than 80°C. Namely, through the operations carried out by the steps 9, 10 and 5, the DC motor 40 is intermittently operated to maintain the temperature of the photocatalyst filter 32 at a 80°C, thereby eliminating the adsorbed substances from the photocatalyst filter 32 to reactivate it under the appropriate condition.

NOx and HNO₃ and the like which have been eliminated from the photocatalyst filter 32 are discharged out of the room or the automobile compartment through the exhaust port 18. In this regard, when the air purifying apparatus 200 of this embodiment is applied to an automobile, the exhaust containing the eliminated (desorbed) substances or the like is forcedly fed to the air cleaner 62 of the engine 60, and then such substances undergo combustion in a combustion chamber and then they are fed to a catalytic converter rhodium 61 so as to be altered into harmless nitrogen which can safely be released into the environment outside the automobile. Further, when the predetermined amount of time has elapsed (i.e., a "Yes" determination at step S7), the process moves to step 4 (S4) to restart the air purifying operation.

In this connection, it is to be noted that even though the elimination process (regeneration of the photocatalyst filter) was described in this second embodiment above as being carried out every time when a predetermined air purifying time has elapsed, it is also possible to have the elimination process be carried out each time when the automobile air purifying apparatus 200 is turned on.

Further, in the second embodiment described above, the photocatalyst filter 32 is heated by intermittently stopping the supply of the feeding air when the photocatalyst filter 32 is reactivated. However, instead thereof, it is also possible to heat the photocatalyst filter 32 by reducing the amount of the feeding air by decreasing the rotational speed of the DC motor 40.

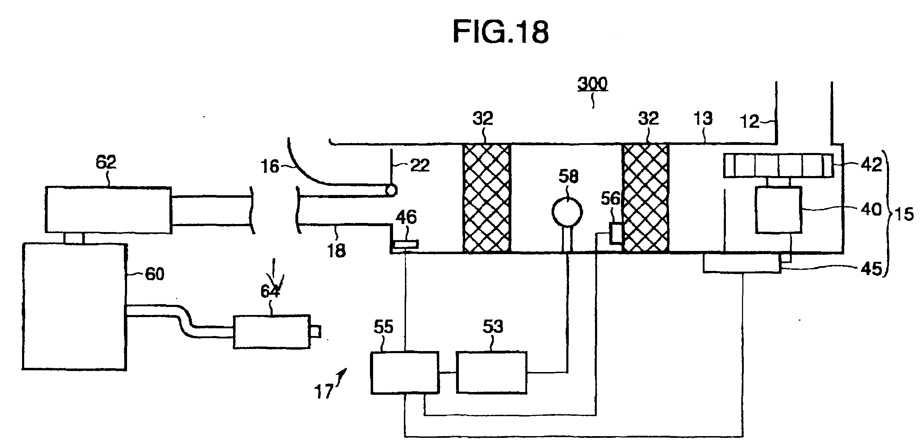

Next, with reference to Fig. 18, a detailed description of the third embodiment of the present invention will now be given.

First. Fig. 18 shows the structure of an automobile air purifying apparatus 300 according to the third embodiment of the present invention. In contrast with the second embodiment described above, the air purifying apparatus of this third embodiment are different from that of the second embodiment only in the following points.
(1) In this third embodiment, the air purifying apparatus 300 includes another photocatalyst filter 30 (second photocatalyst filter) which is located at the upstream side of the photocatalyst filter 32 so as to interpose the ultraviolet lamp 58 therebetween.
(2) In this third embodiment, the ultraviolet lamp 58 is constructed so as to be switchable between the output of 10W and the output of 100W by means of the control device 55.
(3) The second photocatalyst filter 30 is provided with a temperature sensor 56.
(4) In the second embodiment the DC motor 40 is operated intermittently, while in this third embodiment the rotational speed of the DC motor 40 is controlled via the motor controller 45 so as to supply a necessary amount of the feeding air.

Therefore, the same or the corresponding components or parts are designated by the same reference numerals as those used in the second embodiment and thereby detailed descriptions of the third embodiment are omitted.

Further, the operation of the air purifying apparatus 300 of this embodiment is substantially the same as that of the first embodiment which has been described with reference to the flow chart shown in Fig. 14.

Specifically, as shown in Fig. 14, when a starter switch (not shown in the drawings) is turned on (i.e., a "Yes" determination at S1), the process proceeds to step 2(S2). At step 2 (S2) if a "No" determination is made, the process proceeds to Step 3 (S3) where the control device 55 of the air purifying apparatus 100 carries out an operation to open the damper 22 to the outlet port 16 so as to be able to blow purified air into the inside of the room or the automobile compartment. Next, at Step 4 (S4), the ultraviolet lamp 58 is operated at the relatively low output of 10W to irradiate the photocatalyst filters 32, 32 with the relatively low intensity ultrabiolet rays. Then, at Step 5 (S5), the DC motor 40 is operated at high speed to begin forcedly feeding air which is taken in from the air intake port 12 toward the photocatalyst filters 32, 32. In this way, the air which is taken in from the inside of the room or the automobile compartment is forcedly fed so as to pass through the photocatalyst filters 32, 32, where NO and other NOx components are adsorbed and removed by the photocatalyst filters 32, 32, and then the air which has been purified is blown back into the inside of the room or the automobile compartment. This purifying operation continues until the starter switch is turned off (i.e., a "Yes" determination at S6).

Now, when the adsorptivity of the photocatalyst filters 32, 32 goes down as a result of saturation with NOx and the like, the NOx sensor 46 detects NOx, whereupon a "Yes" determination is made at Step 2 (S2), and then the process proceeds to Step 7 (S7) to begin an operation to eliminate adsorbed substances (i.e., to reactivate the photocatalyst filters 32, 32). In this case, first, by means of a signal from the control device 55, the damper 22 is opened to the exhaust port 18 so as to be able to release exhaust containing the eliminated (desorbed) substances to the outside of the room or the automobile compartment (S7). Next, at Step 8 (S8), by means of a signal from the control device 55, the ultraviolet lamp 58 is operated at the relatively high output of 100W to irradiate the photocatalyst filters 32, 32 with the relatively high intensity ultraviolet light. Then, at Step 9 (S9), the temperature sensor 56 is used to determine whether or not the surface temperature of the photocatalyst filter 32 is greater than or equal to a prescribed temperature value (e.g., 80°C). At this point, until the surface temperature of the photocatalyst filter 32 reaches 80°C (i.e., while a "No" determination is made at S9), the process proceeds to Step 10 (S10) where the DC motor 40 is either stopped or the rotation speed thereof is reduced. (In this connection, it is to be noted that the prescribed temperature value may lie in the range 80°C - 100°C.)

In this way, as was described above with reference to Fig. 16, as the surface temperature of the photocatalyst filters 32, 32 rises to 80°C, the activity of the photocatalyst goes up, whereby the NO, NOx and the like adsorbed by the photocatalyst and the activated carbon are eliminated by means of oxidation and/or decomposition thereof, so that the photocatalyst filters 32, 32 are reactivated. In this reactivation operation, when the surface temperature of the photocatalyst filters 32, 32 rises above 80°C. a "Yes" determination is made at Step 9 (i.e., it is determined that the temperature exceeds the prescribed temperature value). In such a case, the process proceeds to Step 11 (S11), where the DC motor 40 is operated at high speed to lower the temperature of the photocatalyst filters 32, 32 to 80°C. Namely, in Steps 9, 10 and 11, the rotational speed of the DC motor 40 is changed to adjust the amount of the feeding air, thereby maintaining the surface temperature of the photocatalyst filters 32, 32 at 80°C. This makes it possible to continuously eliminate adsorbed substances from the photocatalyst under the appropriate temperature. Then, when such elimination process has been completed and the concentration of NOx has been lowered, a "No" determination is made at Step 2 (S2), and then the process proceeds to Step 3 (S3) to restart an air purifying process.

According to this third embodiment, since two photocatalyst filters 32, 32 are provided, there is an advantage that the NOx elimination capacity is improved rather than that of the second embodiment. Further, since not only the intensity of the ultrabiolet rays emitted from the ultraviolet lamp 58 is increased but also the amount of the feeding air is adjusted when the photocatalyst filters 32, 32 are heated for reactivation thereof, there is an advantage that the heating up of the photocatalyst filters 32, 32 can be made in a relatively short amount of time, thereby enabling to complete elimination of the odor components such as NOx from the photocatalyst and the activated carbon in a short amount of time.

Further, in the second and third embodiment described above, it is possible to construct the adsorption means (photocatalyst filter 32) from just an adsorbent made from activated carbon without using any photocatalyst. In this case, when the adsorptivity of the adsorbent goes down, it is also possible to heat and reactivate the adsorbent in the same way by irradiating the adsorbent with ultrabiolet rays from an ultraviolet lamp and adjusting the amount of the feeding air by the air feeding means (i.e., by reducing the rotational speed of the motor, by stopping the motor, or by intermittently carrying out air feeding). In this case, the amount of the feeding air by the air feeding means can be used to adjust and maintain the raised temperature at a prescribed temperature suited for reactivation of the activated carbon, thus making it possible to effectively reactivate the activated carbon without altering its characteristics. Further, it is possible to use a heating means such as a heater or the like to heat the activated carbon instead of the ultraviolet lamp, and to maintain a prescribed raised temperature suited for reactivation for the activated carbon by adjusting the amount of the feeding air by the air feeding means.

Next, a description of the fourth embodiment of an air purifying apparatus according to the present invention will be given.

The feature of the air purifying apparatus 400 of this fourth embodiment resides in that an adsorbent such as activated carbon is heat reactivated under the reduced pressure. In particular, in this embodiment, when heating is carried out in order to reactivate the adsorbent, the negative pressure generated by the motion of the automobile is utilized to reduce the pressure in the purification passage where the adsorbent is arranged. For this reason, there is no need for a powerful fan motor and the large amount of power required for driving such a fan motor in order to reduce the pressure inside the air purifying apparatus. Further, this makes it possible to construct a relatively compact air purifying apparatus which can efficiently eliminate adsorbed substances.

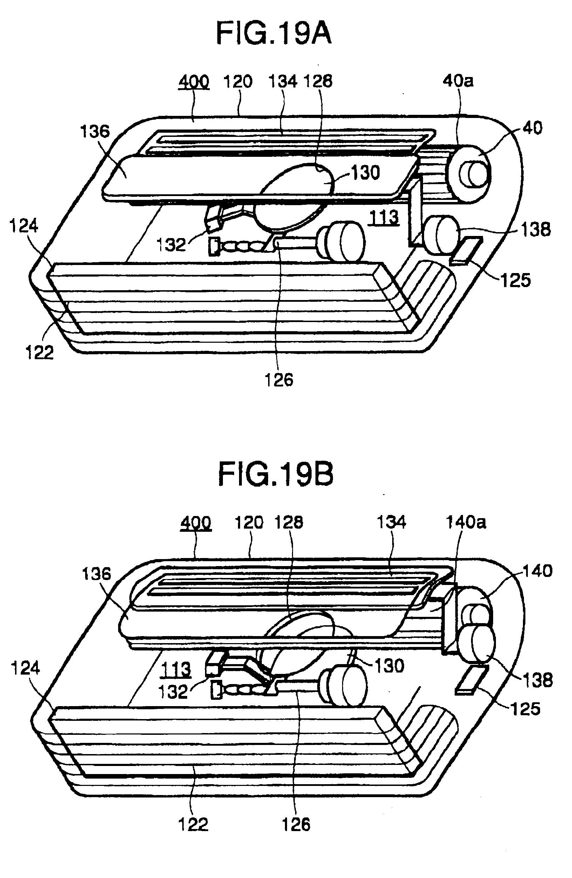

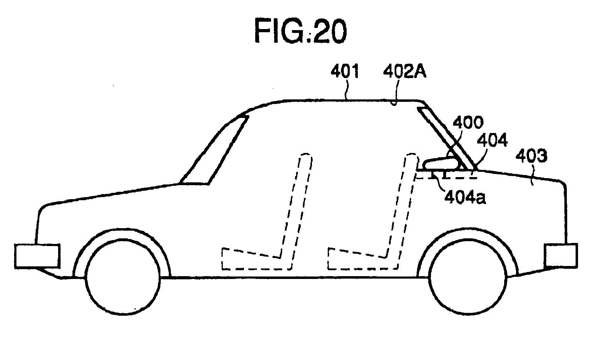

The structure of this fourth embodiment of an air purifying apparatus 400 is shown in Figs. 19 (A) and (B). Further, Fig. 20 shows the mounting position of the air purifying apparatus 400 in an automobile 401 when the air purifying apparatus 400 is adapted for use as an automobile air purifying apparatus. As shown in this drawing, the air purifying apparatus 400 is mounted on a rear shelf 404 which separates an automobile compartment 402A of the automobile 401 from a trunk room 403. In this embodiment, this air purifying apparatus utilizes a negative pressure which is created in the trunk room 403 when the automobile is in motion. Further, in this embodiment, the trunk room 403 constitutes a portion of the ventilation system which creates such an negative pressure and expels exhaust air inside the automobile to the outside of the automobile. Further, in Fig. 20, the reference numeral 404a shows an opening which is formed in the rear shelf.

In more details, Fig. 19(A) shows the state of the air purifying apparatus 400 when it is purifying air, and Fig. 19(B) shows the state of the air purifying apparatus 400 when it is carrying out an operation to reactivate the activated carbon filter 124.

As shown in Fig. 19(B), the air purifying apparatus 400 includes an air intake port 122 comprised of slits formed in the front portion of a housing 120, an outlet port (blow out port) 134 comprised of slits provided in the upper portion of the housing 120 for blowing out purified air, and an exhaust port 128 for expelling exhaust to the trunk room 403 through the opening 404a. Further, in the present embodiment, the space inside the housing 120 which runs from the air intake port 122 to the outlet port 134 or to the exhaust port 128 constitutes a purification passage 113.

Further, in the inside of the housing 120, there are provided with a lid 130 of rubber acting as a check valve for closing the exhaust port 128 and an exhaust port opening-closing device 132 which actuates the lid 130 to open and close the exhaust port 128. Further, a shutter 136 for opening and closing the outlet port 134 is provided in the upper portion of the housing 120, and outlet port opening-closing device (lever) 138 for opening and closing the shutter 136 is provided at a side portion of the housing 120.

Furthermore, in the inside of the housing 120, there are provided with a first adsorption means comprised of a cartridge-type activated carbon filter 124 removably arranged at the air intake port 122; a fan 140 for expelling air which has been taken in from the air intake port 122 and purified by the activated carbon filter 124 out through the outlet port 134, the blades of the fan 140 having a photocatalyst which forms a second adsorption means; an ultraviolet lamp 126 for irradiating and heating the activated carbon filter 124 and the photocatalyst of the fan 140; and a control device for controlling the exhaust port opening-closing device 132 and the outlet port opening-closing device 138.

In the air purifying apparatus 400 according to this embodiment, the activated carbon filter (first adsorption means) 124 functions to mainly adsorb NOx, except for NO, in addition to adsorbing odor components in tobacco smoke and the like. Further, the photocatalyst (second adsorption means) provided on the blades of the fan 140 functions, when it is activated by ultrabiolet rays emitted from the ultraviolet lamp 126, to adsorb and oxidize/decompose NO, which is difficult to be adsorbed by the activated carbon, and oxidize/decompose the main components of tobacco smoke such as aldehydes, ammonia and the like, into water, carbon dioxide and nitric acid by means of photocatalytic reactions. In this connection, the fan 140 is driven by a motor not shown in the drawings.

As shown in Fig. 19(A), when an air purifying operation is being carried out in the air purifying apparatus 400 according to this embodiment, the exhaust port opening-closing device 132 and the outlet port opening-closing device (lever) 138 are operated to close the lid 130 and open the shutter 136. In this state, when the fan 140 is driven to take air in from the intake port 122, such air enters the purification passage 113 through the activated carbon 124. Such air is purified by the activated carbon filter 124 and the photocatalyst provided on the blades of the fan 140 when the air flows in the purification passage 113. Then, thus purified air is expelled from the outlet port 134 into the inside of the automobile compartment.

On the other hand, as shown in Fig. 19(B), when an adsorption means reactivation operation is to be carried out, the shutter 136 is closed to stop air from flowing out from the outlet port 134, and the exhaust port opening-closing device 132 is operated to open the lid (check valve) 130 in order to open the exhaust port 128, whereby the housing 120 establishes communication with the trunk room 403 through the opening 404a to generate a negative pressure inside the housing 120 (that is, inside the purification passage 113). Further, under the condition that the pressure inside the housing 120 is thus reduced by the generation of such negative pressure, the activated carbon filter 124 and the photocatalyst provided on the blades of the fan 140 are irradiated and heated with ultrabiolet rays emitted from the ultraviolet lamp 126 to eliminate the adsorbed substances such as NOx and the like. Then, exhaust containing such eliminated (desorbed) substances is expelled via the trunk room 403 to the outside of the automobile compartment.

In this fourth embodiment, the activated carbon and the photocatalyst are heat reactivated under the reduced pressure created by utilizing the negative pressure generated in the trunk room 403. In this case, it is to be noted that such a negative pressure is created in the trunk room 403 only when the automobile is travelling above a prescribed speed. Accordingly, in this embodiment, the air purifying apparatus is controlled so that the reactivation operation shown in Fig. 19(B) is carried out only when the automobile is travelling at such prescribed speed.

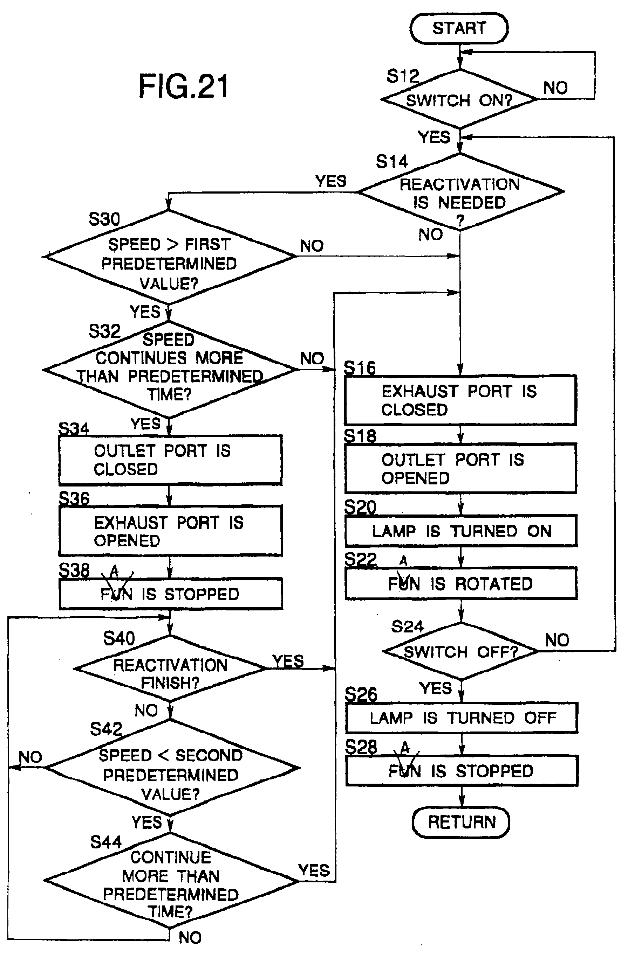

Next, with reference to the flow chart shown in Fig. 21, a description of the operation of the air purifying apparatus 400 will be given.

First, at Step 12 (S12), the control device 125 (which constitutes a reactivating means in this embodiment) carries out a judgement to determine whether or not a starter switch (not shown in the drawings) provided in the drivers instrument panel has been turned on. At this point, if it is determined that the starter switch is "On", the process proceeds to Step 14 (S14) where a judgement is carried out to determine whether or not the activated carbon needs to be reactivated. In this regard, the control device 125 accumulates the operating time of the activated carbon filter 124, and therefor at this step, a reactivation operation is judged to be necessary by the control device 125 when the operating time calculated for the activated carbon filter 124 reaches a prescribed value (e.g., 100 seconds). At this point, if a determination that a reactivation operation is not necessary is made (i.e., a "No" judgement is made at S14), an air purification operation is begun. Therefore, this case will be described first hereinbelow.

Namely, when an air purification operation is to be carried out, the process proceeds to Step 16 (S16), and the exhaust port opening-closing device 132 is operated to close the exhaust port 128 with the lid (check valve) 130 to prevent purified air from escaping into the trunk room 403. Then, at Step 18 (S18), the outlet port opening-closing device 138 is operated to open the outlet port 134 with the shutter 136. Next, at Steps 20 and 22 (S20 & S22), the ultraviolet lamp 126 is lit up to activate the photocatalyst provided on the fan 140 and the fan 140 is driven to take in air from the air intake port 122, whereupon NOx and the like in the air are adsorbed by the activated carbon filter 124 and NO, aldehydes, ammonia and the like in the air are adsorbed and oxidized/decomposed by the photocatalyst provided on the blades of the fan 140, thereby purifying the air. Thus purified air is then expelled out through the outlet port 134 into the automobile compartment.

Then, at Step 24 (S24), a judgement is carried out to determine whether or not the starter switch is "Off". In this case, so long as the starter switch is not "Off" (i.e., a "No" judgement at S24), the process returns to S14 and the purification operation described above is repeated. On the other hand, if it is determined that the starter switch is "Off" (i.e., a "Yes" judgement at S24), the process proceeds to Steps 26 and 28 (S26 & S28) where the ultraviolet lamp 126 and the fan 140 are turned off to terminate the purification operation.

In this process, when the operating time of the activated carbon filter 124 reaches the prescribed value through the purification operations as described above (i.e., when a "Yes" judgement is made at S14), the process proceeds to Step 30 (S30) where a judgement is carried out to determine whether or not the speed of the automobile exceeds a first prescribed speed value (e.g., 40km/hr). For this purpose, the air purifying apparatus is provided with a speed sensor (not shown in the drawing) for measuring the speed of the automobile and output signals to the control device 125. In this regard, the output from a speed meter installed in the automobile can be utilized instead of such a speed sensor.

If a "Yes" judgement is made at S30, the process then proceeds to Step 32 (S32) where a judgement is carried out to determine whether or not the speed of the automobile continues to stay above the first prescribed speed value over a prescribed period of time (e.g., 10 seconds). Namely, in the air purifying apparatus 400 according to the fourth embodiment, because the negative pressure generated in the trunk room 403 during motion of the automobile is used when carrying out an operation to reactivate the activated carbon filter 124, judgements are carried out to determine first whether or not the speed of the automobile exceeds the speed necessary for generating a negative pressure, and then whether or not the speed of the automobile continues to stay above such necessary speed to avoid situations in which the speed of the automobile is going up and down such as in a traffic jam when the automobile is continually advancing and stopping. This determination concerning the speed of the automobile is carried out based on the output of the speed sensor. In this case, if the speed of the automobile does not exceed the prescribed speed value or if the speed of the automobile does not continually exceed the prescribed speed value (i.e., if a "No" Judgement is made at either S30 or S32), the process proceeds to S16, and the activated carbon filter 124 is not reactivated and the purification operation described above is continued.

On the other hand, if the speed of the automobile continues to stay above the prescribed speed value (i.e., if a "Yes" judgement is made at S30 and S32), the process proceeds to Step 34 and the control device 125 operates the outlet port opening-closing device 138 to close the outlet port 134 with the shutter 136 to stop air from flowing out from the outlet port 134. Then, at Steps 36 and 38 (S36 & S38), the exhaust port opening-closing device 132 is operated to open the lid (check valve) 130 in order to open the exhaust port 128, whereby the housing 120 establishes communication with the trunk room 403, and the fan 140 is turned off. In this state, a negative pressure is generated in the purification passage 113 inside the housing 120. Further, the activated carbon filter 124 and the photocatalyst provided on the blades of the fan 140 are irradiated and heated under the reduced pressure conditions with ultrabiolet rays from the ultraviolet lamp 126 to eliminate adsorbed substances such as NOx and the like. Then, the exhaust containing such eliminated substances is expelled via the trunk room 403 to the outside of the automobile.

Next, at Step 40 (S40), a judgement is carried out to determine whether or not the reactivation operating time has reached a prescribed reactivation time. In the case where the reactivation operation has been completed (i.e., a "Yes" judgement at S40), the process proceeds to S16 and the activated carbon filter 124 and the photocatalyst provided on the blades of the fan 140 are once again used to purify air. On the other hand, if the judgement at Step 40 (S40) is "No", the process proceeds to Step 42 (S42). At this Step 42, a judgement is carried out to determine whether or not the speed of the automobile has fallen below a second prescribed speed value (which is lower than the first prescribed speed value; e.g., 35km/hr). In this case, if the speed of the automobile is higher than the second prescribed speed value (i.e., a "No" judgement at S42), the process returns to S40 and the reactivation operation is continued. On the other hand, if the speed of the automobile falls below the second prescribed speed value for generating the required negative pressure (i.e., a "Yes" judgement at S42), the process proceeds to Step 44 (S44) where a judgement is carried out to determine whether or not the speed of the automobile remains below the second prescribed speed value for a prescribed period of time. At this step, so long as the speed of the automobile does not remain below the second prescribed speed value for the prescribed period of time (i.e., a "No" judgement at S44), the process returns to S40 and the reactivation process is continued.

On the other band, if the speed or the automobile remains below the second prescribed speed value continuously for a period of time greater than the prescribed time period, the process proceeds to S16, in which the reactivation operation is interrupted and the activated carbon filter 124 and the photocatalyst on the blades of the fan 140 are once again used to purify air. Then, while the reactivation operation is interrupted and a purification operation is being carried out, if a reactivation operation is judged to be necessary at S14 (i.e., a "Yes" judgement at S14), and if the speed of the automobile exceeds the first prescribed speed value continuously for a prescribed period of time (i.e., "Yes" judgements at S30 & S32), a reactivation operation is begun once again (S34, S36, S38).

In the air purifying apparatus 400 according to the fourth embodiment, the exhaust generated during the reactivation operation is expelled to the outside of the automobile via the trunk room 403. As a result, when this air purifying apparatus 400 is installed in the automobile, such installation is easily carried out because there is no need to provide a separate exhaust pipe to expel the exhaust created during a reactivation operation. Namely, as shown in Fig. 20, it is possible to install the air purifying apparatus 400 just by forming an opening 404a in the rear shelf 404 to communicate with the exhaust port 128 of the air purifying apparatus 400.

Further, in this fourth embodiment, because the reactivation of the activated carbon filter 124 is carried out under the reduced pressure which is created by utilizing the negative pressure generated in the automobile, it is possible to perform the elimination of the adsorbed substances effectively when carrying out a reactivation operation. Further, since the photocatalyst is provided on the blades of the fan 140 and the air that has taken in is agitated by such blades having the photocatalyst inside the housing 120, it is possible to efficiently oxidize/decompose aldehydes, ammonia and the like by the photocatalyst.

Furthermore, even though an ultraviolet lamp 126 was used in the fourth embodiment to heat the activated carbon filter 124, it is of course possible to do away with the photocatalyst provided on the fan 140 and employ a heating means such as a heater or the like instead of the ultraviolet lamp. In this case, it is also possible to carry out an efficient reactivation operation by heat reactivating the activated carbon under reduced pressure.

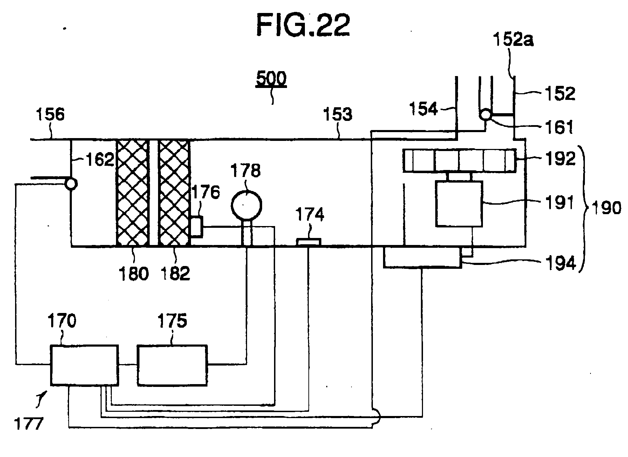

Next, with reference to Figs. 22, 23 and 24, a description of the fifth embodiment of the present invention will be given.

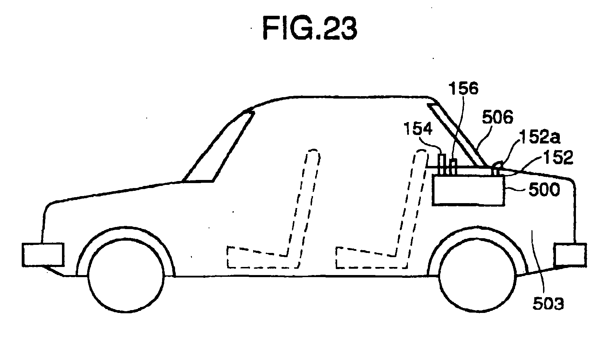

In this connection, Fig. 22 shows the structure of an air purifying apparatus 500 according to the fifth embodiment, and Fig. 23 shows the mounting position of the air purifying apparatus 500 in an automobile when the air purifying apparatus 500 is adapted for use as an automobile air purifying apparatus. As shown in Fig. 23, the air purifying apparatus 500 is provided inside a trunk room 503. The air purifying apparatus 500 includes an exhaust pipe 152 which extends to the outside of the automobile, and an air intake pipe 156 and an outlet pipe 154 which communicate with the inside of the automobile. Further, an opening 152a which is formed in the exhaust pipe 152 is arranged at a position behind the rear windshield where a high negative pressure is generated.

In more details, as shown in Fig, 22, the air purifying apparatus 500 has a purification passage 153 which includes the air intake pipe (air intake port) 156 for taking in air from the inside of the automobile compartment, the outlet pipe (outlet port) 154 for blowing purified air back into the inside of the automobile compartment, and the exhaust pipe (exhaust port) 152 for discharging exhaust containing the eliminated adsorbed substances. Further, a damper 162 is provided to open and close the air intake port 156, and a damper 161 is provided to make it possible to switch the purification passage 153 between the outlet port 154 and the exhaust port 152.

Further, because the exhaust pipe 152 is disposed in a negative pressure environment as described above, the opening 152a of the exhaust pipe 152 is arranged behind the rear windshield at a position where a high negative pressure is generated as described above. In this regard, it is also possible to have the exhaust pipe 152 connected to the trunk room 503 in the same manner as described in the fourth embodiment. Further, when the air purifying apparatus 500 is used for purifying the air in a room, it is possible to connect the exhaust pipe 152 to any appropriate pressure reducing device.

Furthermore, provided in the purification passage 153 is a first adsorption means 182 comprised of a photocatalyst filter for mainly removing NOx components and the odor components in tobacco smoke and the like such as aldehydes, ammonia and the like, and a second adsorption means 180 arranged at a prescribed distance upstream from the first adsorption means 182 (toward the air intake port 156) and comprised of an adsorption filter containing a CO oxidation catalyst for mainly oxidizing CO into CO₂. These first and second adsorption means 180, 182 provided in such a way as to be freely removable from the purification passage 153.

Having a similar structure to the photocatalyst filter 32 described above in the first embodiment, the first adsorbing means (photocatalyst filter) 182 according to the fifth embodiment has a metallic filter member provided with activated carbon and a photocatalyst. The activated carbon function to mainly adsorb odor components such as NOx compounds and the like, except for NO, in addition to adsorbing odor components such as tobacco smoke and the like, while the photocatalyst functions to adsorb and oxidize/decompose NO which are difficult to be adsorbed with activated carbon and to oxidize and/or decompose aldehydes, ammonia and the like. As in the case for the first embodiment, it is preferred that the photocatalyst of the fifth embodiment is carried by the activated carbon.

As described above, this photocatalyst also acts to oxidize NO into NOx which can easily be adsorbed by the activated carbon. Further, because the photocatalyst is carried by the activated carbon in the photocatalyst filter 182, the NOx adsorbed by the activated carbon is further oxidized and/or decomposed into substances such as HNO3 and the like, it is possible to slow down the rate at which NOx accumulates on the activated carbon. Moreover, because the photocatalyst can oxidize/decompose various other organic compounds (i.e., odor components other than NOx) present in the air inside and outside the automobile, it is possible to also slow down the accumulation rate of such organic substances. Further, it is also possible to oxidize/decompose such organic substances that are adsorbed by the activated carbon.

On the other hand, the CO oxidation catalyst used in the second adsorption means 180 is formed from a carrier such as activated carbon fibers or aluminum and a precious metal oxidation catalyst such as Pd or the like for oxidizing CO into CO2, in which the precious metal oxidation catalyst is carried by the carrier.

Further, a light source (ultraviolet ray emitting source) 178 for irradiating and, when necessary, heating the photocatalyst filter (first adsorption means) 182 with ultraviolet rays is provided downstream from the photocatalyst filter 182. In this embodiment, the light source 178 is constructed from an ultraviolet lamp, namely a metal halide lamp, but it is possible to use various lamps so long as they can activate the photocatalyst. The ultraviolet lamp 178 switches between outputs of 10W and 100W by means of a controlling device 170. Further, in this embodiment, the ultraviolet lamp 178 is arranged so as to irradiate the photocatalyst at 100W in order to raise the surface temperature of the photocatalyst from 80°C to 100°C; namely, the ultraviolet lamp 178 is arranged at a distance of 5cm from the first adsorption means (photocatalyst filter) 182.

Further, an air feeding means 190 is arranged in the purification passage 153 at a position downstream from the first adsorption means (photocatalyst filter) 182 to draw in air from the air intake port 156 and forcedly feed such air through the first and second adsorption means 182, 180 toward either the outlet pipe 154 or the exhaust pipe 152. This air feeding means 190 is equipped with a DC motor 191, a turbo fan 192 driven by the DC motor 191, and a motor controller 194 which controls the speed of rotation of the DC motor 191 to feed a required amount of air.

Furthermore, the air purifying apparatus 500 is provided with a reactivating means 177 which detects the saturated state of the photocatalyst filter 182 with adsorbed substances. The reactivating means 177 carries out a prescribed reactivation operation to reactivate the photocatalyst filter 182 when such a saturated state of the photocatalyst filter 182 occurs. Namely, when the photocatalyst filter 32 continues to adsorb Nox components and the like over time even though decomposing them, it becomes saturated with such adsorbed substances, whereby the adsorptivity of the photocatalyst filter 182 becomes lower. For this reason, in this fifth embodiment, the air purifying apparatus 500 is provided with a reactivating means 177 for the photocatalyst filter 182.

This reactivating means 177 is roughly constructed from a stabilizer 175 for lighting up the ultraviolet lamp 178, a temperature sensor 176 for measuring the temperature of the photocatalyst filter 182, a gas concentration sensor 174 for detecting the concentration of a prescribed gas in the air which is passed through the photocatalyst filter 182, and a control device 170 which receives signals from the temperature sensor 176 and the gas concentration sensor 174 and controls the stabilizer 175 and the motor controller 194 in response to the received signals. In the present embodiment, the gas concentration sensor 174 is constructed from an NOx sensor which detects the concentration of NOx in the air. Further, the control device 170 also controls the opening and closing of the dampers 161 and 162.

Further, when a lowering in the adsorptivity of the photocatalyst filter 182 is detected by the NOx sensor 174, a reactivation operation of the photocatalyst filter 182 is carried out. The reactivation operation is carried out by adjusting the rotational speed of the DC motor 191 by means of the motor controller 194 in accordance with signals sent from the control device 170 in order to either reduce the amount of the feeding air or stop supply of such air or intermittently supply such flow of air, and/or by increasing the intensity of the ultraviolet rays emitted from the ultraviolet lamp 178 by means of the stabilizer 175, so that the surface temperature of the photocatalyst filter 32 rises to eliminate the adsorbed substances and thereby reactivate the photocatalyst filter 182.

Namely, the reactivating means 177 causes the ultraviolet lamp 178 to irradiate the photocatalyst filter 182 with high intensity ultraviolet rays in order to raise the surface temperature of the photocatalyst filter 182, thereby eliminating the adsorbed substances from the photocatalyst filter 182 to reactivate it. Further, such an irradiation of the ultraviolet rays also activates the activity of the photocatalyst in the photocatalyst filter 182, and therefore this promotes photocatalytic oxidation/decomposition reactions further, whereby it becomes possible to eliminate odor components such as NOx and the like adsorbed by the activated carbon.

When this reactivation operation (operation to eliminate adsorbed substances) is carried out, the damper 162 is closed and the damper 161 is opened to open the exhaust port 152, whereby the exhaust generated by the reactivation operation is released to the outside of the automobile compartment via the exhaust port 152. In this case, as was described earlier, the opening 152a of the exhaust pipe 152 is positioned behind the rear windshield 506 at a position where a high negative pressure is generated when the automobile is travelling. As a result, when the automobile is travelling above a prescribed speed, the exhaust pipe 152 enables a negative pressure to be generated in the purification passage 153. In this embodiment, the negative pressure generated by the motion of the automobile described above is utilized to maintain a reduced pressure in the purification passage 153 when the photocatalyst filter 182 is undergoing a reactivation operation within the passage 153. For this purpose, as is the same as the fourth embodiment, the air purifying apparatus of this embodiment is provided with a speed sensor (not shown in the drawing) for measuring the speed of the automobile and output signals to the control device 125. In this regard, the output from a speed meter installed in the automobile can be utilized instead of such a speed sensor. The speed sensor constitute a part of the reactivation means 177.

Further, in the air purifying apparatus 500, the NOx, HNO3 and the like eliminated during the reactivation operation are forcedly fed to an air cleaner of an engine, where such substances undergo combustion in a combustion chamber, and then they are fed to a catalytic converter rhodium 61 where they are altered into harmless nitrogen which can safely be released into the environment outside the automobile.

Next, with reference to the flow chart shown in Fig. 24, a description of the operation of the air purifying apparatus 500 according to the fifth embodiment of the present invention will be given.

First, at Step 52 (S52), the control device 170 carries out a judgement to determine whether or not a starter switch (not shown in the drawings) provided in the driver's instrument panel has been turned on. At this Step, if the starter switch is "On", the process proceeds to Step 54 (S54) where a judgement is carried out to determine whether or not the photocatalyst filter 182 needs to be reactivated. This judgement to determine whether or not the photocatalyst filter 182 needs to be reactivated is carried out by determining whether or not the adsorptivity of the photocatalyst filter 182 has gone down based on the output from the NOx sensor 174. At this point, if a judgement that a reactivation is not necessary is made (i.e., a "No" judgement at S54), an air purifying operation is begun. Therefore, this case will be described first hereinbelow.

Namely, in this case, the process proceeds to Step 56 (S56), at which the damper 161 is operated to close the exhaust port (pipe) 152 and the outlet port (pipe) 154 is opened. Then, at Step 58 (S58), the damper 162 is operated to open the air intake port (pipe) 156. Next, at Step 60 (S60), the ultraviolet lamp 178 is operated at a relatively low output to irradiate the photocatalyst filter 182 with relatively low intensity ultraviolet rays to activate the photocatalyst. Then, at Step 62 (S62) the turbo fan 192 is operated to begin forcedly feeding air taken in from the air intake port 156 through the CO oxidation catalyst filter 180 and then the photocatalyst filter 182. In this way, after the CO in the air is oxidized into CO2 by the CO oxidation catalyst filter 180. Thereafter, the NOx components and the like contained in the air are adsorbed by the activated carbon of the photocatalyst filter 182, and NO, aldehydes, ammonia and the like are oxidized/decomposed by the photocatalyst contained in the photocatalyst filter 182. Then, thus purified, air is blown back into the inside of the automobile. This purifying process continues until the starter switch is turned off (i.e., a "No" judgement at S64).

Now, when the adsorptivity of the photocatalyst filter 182 goes down as a result of saturation with NOx and the like, the NOx sensor detects a relatively high concentration of NOx, whereupon a "Yes" judgement is made at (S54). In such a case, the process proceeds to Step 70 (S70) where a judgement is carried out to determine whether or not the speed of the automobile exceeds a first prescribed speed value (e.g., 40km/hr). This determination is carried out based on the output of the speed sensor. In the case where the speed of the automobile exceeds the first prescribed speed value (i.e., a "Yes" judgement at S70), the process then proceeds to Step 72 (S72). In this Step 72, a judgement is carried out to determine whether or not the speed of the automobile continues to stay above the first prescribed speed value for a prescribed period of time (e.g. 10 seconds). Namely, a judgement is carried out to determine whether or not the negative pressure required by the reactivation operation has been generated. At this point, if the speed of the automobile does not exceed the first prescribed speed value or if the speed of the automobile does not continue to exceed the prescribed speed value for the prescribed period of time (i.e., if a "No" judgement is made at either S70 or S72), the process proceeds to S56, so that the photocatalyst filter 182 is not reactivated and the purification operation described above is continued,

On the other hand, if the speed of the automobile continues to stay above the prescribed speed value (i.e., if a "Yes" judgement is made at S70 and S72), the process proceeds to Steps 73 and 74 where the control device 170 operates the damper 162 to close the air intake port 156 (S73) and operates the damper 161 to open the exhaust port 152 and close the outlet port 154 (S74). Namely, by closing the intake port 156 and the outlet port 154, the flow of air into the purification passage 153 of the air purifying apparatus 500 is stopped, and this enables a high negative pressure to be generated in the purification path 153. Next, at Step 75 (S75), the ultraviolet lamp 178 is operated at a relatively high output to irradiate the photocatalyst filter 182 with relatively high intensity ultraviolet rays in order to heat the photocatalyst filter 182. At this point, the temperature sensor 176 is used to measure the surface temperature of the photocatalyst filter 182, and in the case where the measured surface temperature is greater than a prescribed temperature value (e.g., 80oC), the intensity of the ultraviolet rays emitted by the ultraviolet lamp 178 is lowered to maintain the surface temperature of the photocatalyst filter 182 at the prescribed temperature value.

In this way, by heating the photocatalyst filter 182 under the reduced pressure conditions, adsorbed substances such as NOx and the like are effectively eliminated from the photocatalyst filter 182 and then they are expelled to the outside of the automobile via the exhaust pipe 152. Then, at Step 77 (S77), a judgement is carried out to determine whether or not the speed of the automobile has fallen below a third prescribed speed value (which is lower than the first prescribed speed value; e.g., 30km/hr). At this point, if the speed of the automobile is higher than the third prescribed speed value (i.e., a "Yes" judgement at S77), namely, in the case where a sufficient reduction in pressure is created in the purification passage 153 of the air purifying apparatus 500 just by negative pressure generated by the motion of the automobile, the process proceeds to Step 78 (S78) at which the turbo fan 192 is shut off to economize energy. On the other hand, if the speed of the automobile is below the third prescribed speed value (i.e., a "No" judgement at S77), the turbo fan 192 is operated to work in conjunction with the low negative pressure generated by the slow speed of the automobile in order to create the required reduction in pressure in the purification passage 153 of the air purifying apparatus 500.

Next, at Step 80 (S80), a judgement is carried out to determine whether or not the reactivation operation has been carried out for a prescribed reactivation time. In the case where it is judged that the reactivation operation is completed (i.e.. a "Yes" judgement at S80), the process proceeds to Step 56 and a purification operation is once again begun for the photocatalyst filter 182. On the other hand, if it is judged that the reactivation operation has not been completed (i.e., a "No" judgement at S80), the process proceeds to Step 82 (S82) in which a judgement is carried out to determine whether or not the speed of the automobile is below a second prescribed speed value (which is lower than the first prescribed speed value; e.g., 35km/hr). In this Step, if a judgement that the speed of the automobile is above the second prescribed speed value is made (i.e. a "No" judgement at S82), the process returns to S77 and then the reactivation operation is continued. On the other hand, if the speed of the automobile is below the second prescribed speed value (i.e., a "Yes" judgement at S82), the process proceeds to Step 84 (S84). In Step 84, a judgement is carried out to determine whether or not the speed of the automobile remains below the second prescribed speed value for a prescribed period of time (e.g., 30 seconds). In this case, so long as the speed of the automobile does not remain below the second prescribed speed value for the prescribed period of time (i.e., a "No" judgement at S84), the process returns to S77 and the reactivation process is continued. On the other hand, if the speed of the automobile remains below the second prescribed speed value continuously for a period of time greater than the prescribed time period, the process proceeds to S56, whereby the reactivation operation is interrupted and the photocatalyst filter 182 are once again used to purify air. Then, while the reactivation operation is interrupted and a purification operation is being carried out, if a reactivation operation is judged to be necessary at S54 (i.e., a "Yes" judgement at S54), and if the speed of the automobile exceeds the first prescribed speed value continuously for a prescribed period of time (i.e., "Yes" judgements at S70 & S72), a reactivation operation is begun once again (S73, S74, S75).

In the air purifying apparatus 500 according to the fifth embodiment, the negative pressure generated by the motion of the automobile is utilized when a reactivation operation on the photocatalyst filter 182 is carried out at reduced pressure. This makes it possible to increase the elimination efficiency when carrying out a reactivation operation. Namely, by closing the air intake pipe 156 and the outlet pipe 154, the reduced pressure created in the purification passage 153 of the air purifying apparatus 500 makes it possible to increase the efficiency at which adsorbed substances are removed from the photocatalyst filter 182.

In this connection, even though the first adsorption means of the fifth embodiment was described as using a photocatalyst filter made from activated carbon containing a photocatalyst, it is of course possible to use other adsorbents (e.g.. silica gel, activated alumina, zeolite or the like) in place of the activated carbon and to use any combination of such adsorbents to construct an adsorbent means which does not include a photocatalyst. In such cases, it is also possible to carry out a more effective reactivation operation under the reduced pressure when reactivating the adsorbent.

Further, in the air purifying apparatus 500 according to the fifth embodiment, the opening 152a of the exhaust pipe 152 which lies outside the automobile may be covered with a cover or the like to shield the opening 152a from rain and the like.

Furthermore, even though the photocatalyst of the photocatalyst filter 182 was described above in the fifth embodiment as being carried by the activated carbon, it is of course possible to separately provide such photocatalyst. Further, it is possible to use an adsorbent such as silica gel, zeolite or the like in place of the activated carbon. Even in such a case, it is also preferred that the photocatalyst is carried by such adsorbent.

Moreover, even though the air purifying apparatus 500 was described in the fifth embodiment above as being adapted for removing toxic substances such as NOx, CO and the like, it is of course possible to apply this application into an air purifying apparatus of the type which uses activated carbon to purify air in an automobile by removing odor components such as those found in tobacco smoke.

In the present embodiment, by using the activated carbon and the photocatalyst while carrying out an operation to eliminate adsorbed substances as needs arise or periodically, it is possible to continuously use the activated carbon and the photocatalyst to purify air over a long period of time without the need for replacement. Further, by reactivating the activated carbon at reduced pressure, it is possible to efficiently reactivate the activated carbon with a short period of time. In this connection, because such reactivation operation to eliminate the adsorbed substances is not carried out using high heat, there is no deterioration of the characteristics of the activated carbon.

As described above, in the air purifying apparatuses according to the fourth and fifth embodiments, since the activated carbon and the photocatalyst are reactivated under the reduce pressure, it is possible to increase an efficiency when eliminating adsorbed substances. In particular, by using the negative pressure generated by the motion of the automobile to create such reduced pressure, it is possible to conserve energy because any other devices such as a motor or the like is not needed to create the reduced pressure.

Furthermore, even though the air purifying apparatuses of the fourth and fifth embodiments were described above as being adapted for use in an automobile, it is of course possible to adapt such air purifying apparatuses to be used as general air purifying apparatuses to purify the air in any kind of room or compartment. In this case, the pressure in the purification path can be reduced by providing a suction means such as special fan or the like in the exhaust port. Further, as shown in the case of the fifth embodiment, this can be accomplished by providing an air force feeding means downstream from the photocatalyst filter. If constructed so, when the air intake pipe 156 is closed, the air force feeding means can be operated to reduce the pressure in the purification passage 153.

Finally, it is to be noted that many changes and additions may be made to the embodiments described above without departing from the scope and spirit of the present invention as defined in the appended claims.

## Claims

1. An air purifying apparatus for use in an automobile, comprising:
a purification passage having an intake port for introducing air from a compartment of the automobile and an outlet for discharging purified air into the compartment of the automobile;
adsorbing means provided inside said purification passage and including a photocatalyst for mainly removing NO contained in the introduced air;
a light source for irradiating light toward the photocatalyst included in said adsorbing means; and
air feeding means for feeding the air from the compartment of the automobile toward said adsorbing means.

2. The air purifying apparatus as claimed in claim 1, wherein said adsorbing means further includes an adsorbent for mainly removing odor components contained in the introduced air.

3. The air purifying apparatus as claimed in claim 2, wherein said adsorbent is formed of at least one material selected from the group comprising activated carbon, silicagel, activated alumina and zeolite.

4. The air purifying apparatus as claimed in claim 2, wherein said photocatalyst is carried by said adsorbent.

5. The air purifying apparatus as claimed in claim 2, wherein said photocatalyst is formed of at least one material selected from the group comprising oxide of Ti, Cu, Zn, La, Mo, V, Sr, Ba, Ce, Sn, Fe, W, Mg and Al and noble metals.

6. The air purifying apparatus as claimed in claim 5, wherein said photocatalyst is formed of TiO₂.

7. The air purifying apparatus as claimed in claim 2, wherein said light source is means for generating ultraviolet ray.

8. The air purifying apparatus as claimed in claim 7, wherein said ultraviolet ray generating means is constructed so as to be able to change the intensity of the light irradiated therefrom in at least two levels.

9. The air purifying apparatus as claimed in claim 1, further comprising another adsorbing means which is provided inside said purification passage for mainly adsorbing neutral gas.

10. The air purifying apparatus as claimed in claim 9, wherein said another adsorbing means is arranged upstream from said adsorbing means so as to interpose said light source therebetween.

11. The air purifying apparatus as claimed in claim 9, wherein said another adsorbing means includes an activated carbon fiber product which is formed by folding an activated carbon fiber into a pleat-shape.

12. The air purifying apparatus as claimed in claim 1, further comprising means for reactivating said adsorbing means by heating it periodically or as needs arise.

13. The air purifying apparatus as claimed in claim 12, wherein said air feeding means is constructed so as to be able to adjust the amount of the feeding air, in which said reactivating means raises the temperature of the adsorbing means by controlling the air feeding means so as to stop it or reduce the amount of the feeding air.

14. The air purifying apparatus as claimed in claim 12, wherein said light source is constructed so as to be able to change the intensity of the light irradiated therefrom, in which said reactivating means raises the temperature of the adsorbing means by controlling the intensity of the light irradiated from said light source to be larger.

15. The air purifying apparatus as claimed in claim 12, wherein said air feeding means is constructed so as to be able to change the amount of the feeding air and said light source is constructed so as to be able to change the intensity of the light irradiated therefrom, in which said reactivating means is operated so as to raises the temperature of said adsorbing means by controlling the light source such that said light source irradiates relatively high intensity light toward the photocatalyst and by controlling the air feeding means such that it stops supplying air or reduces the amount of the feeding air.

16. The air purifying apparatus as claimed in claim 15, wherein said reactivating means is operated so as to maintain the raised temperature by adjusting the amount of the air fed by said air feeding means.

17. The air purifying apparatus as claimed in claim 16, wherein said adsorbing means is heated to a temperature of 80°C to 100°C.

18. The air purifying apparatus as claimed in claim 12, wherein said reactivating means comprises:
a gas concentration measuring means for measuring a concentration of a predetermined gas contained in the air which has passed said adsorbing means;
a temperature sensor for measuring the temperature of said adsorbing means; and
controlling means for controlling the intensity of the light irradiated from said light source and an amount of the air fed by said air feeding means responsive to the outputs from said gas concentration measuring means and said temperature sensor.

19. The air purifying apparatus as claimed in claim 12, wherein said purification passage further comprises an exhaust port which is constructed so as to be switchable with said outlet and which communicates with outside of the automobile or a cleaner of an engine of the automobile, and said intake port communicates with said exhaust port during operation of said reactivating means.

20. The air purifying apparatus as claimed in claim 1, further comprising means for reducing the pressure inside said purification passage in which said adsorbing means is positioned so that reactivation of said adsorbing means can be carried out under the reduced pressure.

21. The air purifying apparatus as claimed in claim 20, wherein said pressure reducing means reduces the pressure by utilizing negative pressure generated in or around the automobile during the running of the automobile.

22. The air purifying apparatus as claimed in claim 21, wherein said purification passage further includes an exhaust port which communicates with the outside of the automobile and which is switchable with said outlet which communicates with the compartment of the automobile, in which said pressure reducing means includes an arrangement of said exhaust port which is arranged at a portion of the automobile where negative pressure is created during running of the automobile.

23. The air purifying apparatus as claimed in claim 22, wherein said exhaust port is arranged in a trunk room of the automobile.

24. The air purifying apparatus as claimed in claim 20, wherein the pressure reducing means further includes a speed sensor, in which the reactivating means is operated when said speed sensor detects a speed that exceeds a predetermined speed for a certain period.

25. A method of purifying air in an air purifying apparatus for an automobile, comprising the steps of:
feeding air inside a compartment of the automobile to adsorbing means including a photocatalyst;
irradiating a certain amount of light that enables said adsorbing means to cause photocatalytic reaction;
adsorbing NO contained in the air by the photocatalyst of said adsorbing means and removing the NO in the air; and
discharging the air from which the NO is removed inside the automobile.

26. The method of purifying air as claimed in claim 25, further comprising a step of eliminating the NO which has been adsorbed by the photocatalyst by stopping feeding the air to the adsorbing means or reducing the amount of the feeding air to heat said adsorbing means when said adsorbing ability for NO of said photocatalyst is lowered.

27. The method of purifying air as claimed in claim 25, further comprising a step of eliminating the NO which has been adsorbed by the photocatalyst by irradiating a relatively large amount of light to heat said adsorbing means when said adsorbing ability for NO of said photocatalyst is lowered.

28. The method of puritying air as claimed in claim 25, further comprising a step of eliminating the NO which has been adsorbed by the photocatalyst by stopping feeding the air to the adsorbing means or reducing the amount of the feeding air as well as by irradiating a relatively large amount of light to heat said adsorbing means when said adsorbing ability for NO of said photocatalyst is lowered.

29. The method of purifying air as claimed in claim 28, further comprising a step of adjusting the amount of the feeding air to said adsorbing means.

30. The method of purifying air as claimed in claim 29, wherein the adjustment of the feeding air is operated so as to maintain the temperature of the adsorbing means at 80°C to 100°C.

31. An air purifying apparatus for an automobile, comprising:
a purification passage having an intake for introducing air from a compartment of the automobile and an outlet for discharging purified air into the compartment of the automobile;
at least one adsorbing means provided inside said purification passage and including a photocatalyst for mainly removing NO contained in the introduced air and an adsorbent for mainly adsorbing odor components such as NOx except NO;
a light source for irradiating light toward said adsorbing means;
air feeding means for feeding the air in the compartment of the automobile toward said adsorbing means; and
reactivating means for reactivating said adsorbing means by adjusting the amount of the feeding air to raise the temperature of said adsorbing means as needs arise or periodically.

32. The air purifying apparatus for an automobile as claimed in claim 31, wherein said air feeding means is constructed so as to be able to adjust the amount of the feeding air, in which said reactivating means raises the temperature of the adsorbing means by controlling the air feeding means so as to stop the supply of the air or reduce the amount of the feeding air.

33. The air purifying apparatus for an automobile as claimed in claim 31, wherein said light source is constructed so as to be able to change the intensity of the light irradiated therefrom, in which said reactivating means raises the temperature of the adsorbing means by controlling the intensity of the light irradiated from said light source to be larger.

34. The air purifying apparatus for an automobile as claimed in claim 31, wherein said air feeding means is constructed so as to be able to change the amount of the feeding air and said light source is constructed so as to be able to change the intensity of the light irradiated therefrom, in which said reactivating means is operated so as to raises the temperature of said adsorbing means by controlling the light source such that said light source irradiates relatively high intensity light toward the photocatalyst and by controlling the air feeding means such that it stops supplying air or reduces the amount of the feeding air.

35. The air purifying apparatus for an automobile as claimed in claim 34, wherein said reactivating means is operated so as to maintain the raised temperature by adjusting the amount of the air fed by said air feeding means.

36. The air purifying apparatus as claimed in claim 31, wherein said reactivating means comprises:
a gas concentration measuring means for measuring a concentration of a predetermined gas contained in the air which has passed said adsorbing means;
a temperature sensor for measuring the temperature of said adsorbing means; and
controlling means for controlling the intensity of the light irradiated from said light source and an amount of the air fed by said air feeding means responsive to the outputs from said gas concentration measuring means and said temperature sensor.

37. The air purifying apparatus as claimed in claim 31, wherein said at least one adsorbing means is constructed from a pair of adsorbing means which are arranged at the opposite sides of said light source.

38. An air purifying apparatus for an automobile. comprising:
a purification passage having an inlet for introducing air from a compartment of the automobile and an outlet for discharging purified air into the compartment of the automobile;
adsorbing means disposed in said purification passage and including at least activated carbon;
heating means provided in said purification passage for heating said adsorbing means, said heating means being constructed so as to be able to adjust its quantity of heat;
air feeding means provided in said purification passage for feeding the air to said adsorbing means, said air feeding means being constructed so as to be able to adjust the amount of the feeding air; and
reactivating means for reactivating said adsorbing means by activating said heating means as well as by adjusting the amount of the feeding air to raise the temperature of said adsorbing means as needs arise or periodically.

39. The air purifying apparatus for an automobile as claimed in claim 38, wherein said heating means includes ultraviolet ray irradiating means which irradiates light toward said adsorbing means.

40. The air purifying apparatus for an automobile as claimed in claim 39, wherein said adsorbing means further comprises a photocatalyst which exhibits photocatalytic reaction by the light irradiated from said ultraviolet ray source.

41. The air purifying apparatus for an automobile as claimed in claim 40 wherein said photocatalyst is carried by said activated carbon.

42. The air purifying apparatus for an automobile as claimed in claim 40, wherein said air reeding means comprises a fan, in which said photocatalyst is provided on said fan of said air feeding means, and said activated carbon is provided in a cartridge removably disposed in the vicinity of said intake port of said air purification passage.

43. The air purifying apparatus for an automobile as claimed in claim 38, wherein said reactivating means includes control means for maintaining the raised temperature of the adsorbing means at a certain temperature by adjusting the amount of the feeding air by said air feeding means.

44. An air purifying apparatus for an automobile, comprising:
a purification passage having an intake for introducing air from a compartment of the automobile and an outlet for discharging purified air into the compartment of the automobile;
at least one adsorbing means disposed in said purification passage for purifying the air;
reactivating means for reactivating said adsorbing means to raise the temperature of said adsorbing means by heating said adsorbing means as needs arise or periodically; and
pressure reducing means for reducing an inner pressure of said purification passage in which said adsorbing means is disposed so that the reactivation of said adsorbing means is carried out under the reduced pressure.

45. The air purifying apparatus for an automobile as claimed in claim 44, wherein said pressure reducing means reduces the inner pressure by utilizing negative pressure generated within and around the automobile when it is running.

46. The air purifying apparatus for an automobile as claimed in claim 45, wherein said air purification passage has an exhaust port which is switchable with said outlet and which communicates the outside of the automobile, wherein said pressure reducing means includes an arrangement of said exhaust port wherein said exhaust port is positioned at a portion of the automobile where the negative pressure is generated.

47. The air purifying apparatus for an automobile as claimed in claim 46, wherein said exhaust port is arranged in a trunk room of the automobile.

48. The air purifying apparatus for an automobile as claimed in claim 44, wherein said pressure reducing means further includes a speed sensor, and said reactivating means is operated when said speed sensor detects a speed that exceeds a predetermined speed over a certain period.

49. The air purifying apparatus for an automobile as claimed in claim 49, wherein said reactivating means includes an ultraviolet ray generating source for irradiating light toward said adsorbing means to raise the temperature thereof.

50. The air purifying apparatus for an automobile as claimed in claim 49, wherein said adsorbing means includes a first adsorbing means which contains activated carbon and a second adsorbing means which exhibits a photocatalytic reaction by the light irradiated from said ultraviolet ray generating means.

51. The air purifying apparatus for an automobile as claimed in claim 49, wherein said adsorbing means includes a first adsorbing means which contains activated carbon and a photocatalyst which is carried by the activated carbon and a second adsorbing means which contains CO oxidation catalyst, and said ultraviolet ray generating means is arranged between said first adsorbing means and said second adsorbing means.

52. A method of reactivating an adsorbent in an air purifying apparatus for an automobile, comprising the steps of:
reducing a pressure in an environment in which an adsorbing means is placed by utilizing a negative pressure that is generated within or around the automobile when the automobile is running; and
reactivating said adsorbing means by heating said adsorbing means under the reduced pressure.

53. The method of reactivating an adsorbent in an air purifying apparatus for an automobile as claimed in claim 52, further comprising the step of measuring a speed of the automobile, wherein said adsorbing means reactivating step is executed when a speed that exceeds a predetermined speed is detected over a certain period in said speed measuring step.

54. An air purifying apparatus, comprising:
an air purification passage having an intake for introducing air and an outlet for discharging purified air;
adsorbing means provided in said air purifying passage and including a photocatalyst for mainly adsorbing NO in the air;
a light source for irradiating light toward said adsorbing means, said light source being constructed so as to be able to change the intensity of the light irradiated therefrom;
air feeding means provided in said purification passage for feeding the air to said adsorbing means, said air feeding means being constructed so as to be able to adjust the amount of the feeding air; and
reactivating means for reactivating said adsorbing means by stopping said air feeding means or adjusting said air feeding means so as to reduce the amount of the feeding air and/or by increasing the intensity of the light irradiated from said light source to raise the temperature of said adsorbing means as needs arise or periodically.

55. The air purifying apparatus as claimed in claim 54, wherein said adsorbing means further includes an adsorbent for mainly removing odor components in the air.

56. The air purifying apparatus as claimed in claim 55, wherein said adsorbent is formed of at least one material selected from the group comprising activated carbon, silicagel, activated alumina and zeolite.

57. An air purifying apparatus, comprising:
an air purification passage having an intake for introducing air and an outlet for discharging purified air;
adsorbing means provided in said air purifying passage and containing at least activated carbon;
means for heating said adsorbing means, said adsorbing means being constructed so as to be able to adjust the quantity of the heat;
air feeding means provided in said purification passage for feeding the air to said adsorbing means, said air feeding means being constructed so as to be able to adjust the amount of the feeding air; and
reactivating means for reactivating said adsorbing means by stopping said air feeding means or adjusting said air feeding means so as to reduce the amount of the feeding air and/or by increasing the quantity of the heat emitted from said heating means to raise the temperature of said adsorbing means as needs arise or periodically.

58. An air purifying apparatus, comprising:
an air purification passage having an inlet for introducing air and an outlet for discharging purified air;
at least one adsorbing means provided in said air purification passage for purifying the air;
reactivating means for reactivating said adsorbing means to raise the temperature of said adsorbing means to eliminate the adsorbed substances by heating said adsorbing means as needs arise or periodically; and
pressure reducing means for reducing an inner pressure of said purification passage in which said adsorbing means is disposed so that the reactivation of said adsorbing means is carried out under the reduced pressure.

59. A method of purifying air in an air purifying apparatus, comprising the steps of:
feeding air containing NO toward an adsorbing means which includes a photocatalyst and activated carbon;
irradiating a certain quantity of light that enable the photocatalyst of said adsorbing means to cause photocatalytic reaction;
adsorbing NO in the air by the photocatalyst of said adsorbing means and removing the NO in the air; and
discharging the air which has been purified by the photocatalyst and the activated carbon.

60. A method of reactivating an adsorbent in an air purifying apparatus, comprising the steps of:
irradiating a relatively high intensity light to the adsorbent which contains a photocatalyst and is disposed in an air purification passage in the air purifying apparatus through which air to be purified passes, to heat the photocatalyst; and
accelerating the beating of the photocatalyst by stopping supply of the air or by reducing the amount of the supply of the air.

61. The method of reactivating an adsorbing means in an air purifying apparatus as claimed in claim 60, further comprising the step of adjusting the amount of the supply of the air to maintain the raised temperature of said adsorbing means in a predetermined value.

62. A method of reactivating an adsorbent in an air purifying apparatus, comprising the steps of:
heating the adsorbent which contains at least activated carbon and which disposed in an air purifying passage of said air purifying apparatus through which air to be purified passes; and
accelerating the heating up of the adsorbent and then maintaining the raised temperature in a predetermined value by adjusting the amount of the supply of the air.

63. A method of reactivating an adsorbent in an air purifying apparatus, comprising the steps of:
reducing a pressure in an environment in the air purifying apparatus in which an adsorbing means containing at least activated carbon is placed; and
reactivating said adsorbing means by heating the adsorbing means under the reduced pressure.
